# EUROPEAN PATENT SPECIFICATION

(11) **EP 1 289 228 B1**
(45) Date of publication and mention of the grant of the patent: **03.01.2007**
(21) Application number: 02251541.5
(22) Date of filing: 05.03.2002
(51) Int. Cl.: H04L 29/06, H04L 29/12

(54) **Internet appliance terminal and user management system/program**
Internet-Endgerät und Verbraucherverwaltungssystem/program
Terminal internet et système/programme de gestion des utilisateurs

(30) Priority: 28.08.2001 JP 2001257477
(43) Date of publication of application: 05.03.2003
(73) Proprietor: FUJITSU LIMITED, Kawasaki-shi, Kanagawa 211-8588 (JP)
(72) Inventor: Tanikawa, Seijun, c/o Fujitsu Limited, Kawasaki-shi, Kanagawa 211-8588 (JP); Nakamura, Toshihisa, c/o Fujitsu Limited, Kawasaki-shi, Kanagawa 211-8588 (JP); Oki, Hiroshi, c/o Fujitsu Limited, Kawasaki-shi, Kanagawa 211-8588 (JP); Munakata, Akio, c/o Fujitsu Limited, Kawasaki-shi, Kanagawa 211-8588 (JP)
(74) Representative: Stebbing, Timothy Charles

(56) References cited:
- EP-A- 1 043 648
- WO-A-01/01293
- WO-A-01/60026
- CA-A- 2 287 094
- US-A- 5 590 199

## Description

The present invention relates to a management method of an Internet access device (information home appliance) which is required when maintaining or providing additional services to various types of device used at home and in industry. In addition, the invention concerns a user management system/program thereof.

With the advance of the Internet in recent years, devices of various kinds which can be connected to the Internet (henceforth referred to as Internet Appliance (IA) terminals) have proliferated. However, the progress of technology is so fast that the functions with which IA terminals are equipped rapidly become obsolete.

To overcome this disadvantage, a method has been developed in which the state of an IA terminal is registered in a central system (an IA terminal user management system), data required to bring the terminal up-to-date is automatically extracted in the central system, and the data is supplied to the IA terminal.

However, the registration procedure for a user to register the state of an IA terminal in the central system tends to vary depending on how the terminal was acquired or distributed, so that the registration operation is difficult for non-experts. Also, in order to make users' operation easy, the IA terminal itself and\or its software are often specially adapted for controlling the terminal according to the distribution method used.

For example, one distribution method of an IA terminal is such that when a user purchases an IA terminal from a manufacturer or a dealer, the user has to conclude an Internet connection contract with an Internet service provider (ISP) independently of (without using) the IA terminal, and afterwards he has to register the IA terminal through an interactive operation with the ISP via the Internet.

On the other hand, when an ISP or an application service provider (ASP) provides an IA terminal as part of its service, it is necessary to register the information of the IA terminal or the user's information based on a procedure for registration specific to the IA terminal which is matched with the service that the ISP or ASP provides.

EP-A-1 043 648 discloses an Internet appliance (or IA) user management system, an IA apparatus and a program according to the preamble of each independent claim. A token or smart card is inserted in the IA apparatus, causing a message to be sent to an authentication manager of the user management system. A first authentication module looks up the token in a database to see if it is registered; if not (in other words, if the user has not registered), a second authentication module initiates a registration session with the user.

CA-A-2 287 094 discloses a method and apparatus allowing a user to be authenticated to two or more independent service providers through a single registration process. A so-called core performs communication with a client peer used by a user in a network. If the user has not previously registered with the network, a registration process is initiated during which the user can be provided with various options for subscribing to services available through the network.

The above prior art proposals provide techniques allowing a user to be registered with a service provider, but do not register information of the user's terminal (IA terminal) itself. Thus, there is a need for a technique to register information about the terminal in a convenient manner.

The purpose of the present invention is to provide an IA terminal as well as a user management system and program by which an inexpert user can register the information about himself and the IA terminal without having to adapt the IA terminal or its control software, regardless of the manner of distribution of the IA terminal.

The IA terminal user management system of the present invention comprises an Internet appliance -IA- user management system capable of being connected to an IA terminal of a user via a network and capable of performing registration of at least said user, comprising: an IA terminal user storing unit for storing service information including the kind of service to be received, and user registration information including user information concerning the user who receives the service; a transmission and receiving unit for receiving the user registration information from the IA terminal, and requesting the IA terminal to input the user registration information; a user registration information collation unit for collating the user registration information received by the transmission and receiving unit with the user registration information stored in the IA terminal user storing unit; and an automatic registration unit for obtaining the user registration information which has not been collated by the user registration information collation unit from the IA terminal by means of the transmission and receiving unit and registering said information in the IA terminal user storing unit; characterised in that: said IA terminal user storing unit is arranged to store IA terminal information including an IA terminal identifier for identifying the IA terminal; said transmission and receiving unit is arranged to receive the IA terminal identifier from the IA terminal; and said user information collation unit is arranged for collating the IA terminal identifier received from the IA terminal with the IA terminal identifier stored in the IA terminal user storing unit; whereby said registration includes registration of said IA terminal in addition to registration of said user.

In a first aspect of operation, the IA terminal user storage unit stores IA terminal information including an IA terminal identifier for identifying the IA terminal, service information including the kind of service which the user receives, and user registration information including user information concerning the user who receives the service. The transmission and receiving unit transmits and receives user registration information to and from the IA terminal, and requests the IA terminal to input user registration information. The user registration information collation unit collates the user registration information received by the transmission and receiving unit with the user registration information stored in the IA terminal user storage unit. The automatic registration unit obtains the user registration information which was not collated by the user registration information collation unit from the IA terminal via the transmission and receiving unit, and registers said information into the IA terminal user storage unit.

The IA terminal of the present invention has its own transmission and receiving unit, and an input unit.

In a second aspect of operation, the IA terminal transmission and receiving unit transmits and receives IA terminal information including an IA terminal identifier for identifying the IA terminal, and user registration information including user information concerning the user who receives the service to and from the IA terminal user management system which manages the IA terminal via the above-mentioned network. The input unit is used to supply any missing registration information based on the request from the user management system, and the transmission and receiving unit transmits this information to the user management system.

Reference will now be made, by way of example only, to the accompanying drawings in which:
Fig. 1 shows the entire block diagram of the IA terminal user management system to which the present invention applies;
Fig. 2 shows the data structure of a machine table, subscriber table, and affinity table of which an IA terminal user database is composed;
Fig. 3 is a flowchart indicating the flow of the registration processing which is executed in the IA terminal;
Fig. 4 is a flowchart of the erasure processing executed in the IA terminal;
Fig. 5 is a flowchart of the processing executed in the IA terminal user management system;
Fig. 6 is a flowchart indicating the flow of the registration processing of fully automatic registration;
Fig. 7 shows an example (example 1) of the data structure of the machine table, subscriber table, and affinity table in the registration processing of fully automatic registration;
Fig.8 shows an example (example 2) of the data structure of the machine table, subscriber table, and affinity table in the registration processing of fully automatic registration;
Fig.9 is a flowchart (flowchart 1) showing the flow of the registration processing of semi-fully automatic registration;
Fig. 10 is a flowchart (flowchart 2) showing the flow of the registration processing of semi-fully automatic registration;
Fig. 11 is a flowchart showing the flow of the registration processing of smart card registration (smart card registration 1);
Fig. 12 is a flowchart (flowchart 1) showing the flow of the registration processing of smart card registration (smart card registration 2);
Fig. 13 is a flowchart (flowchart 2) showing the flow of the registration processing of smart card registration (smart card registration 2);
Fig. 14 is a flowchart (flowchart 1) showing the flow of the registration processing of manually-operated registration (manually-operated registration 1);
Fig. 15 is a flowchart (flowchart 2) showing the flow of the registration processing of manually-operated registration (manually-operated registration 1);
Fig. 16 shows an example (example 1) of the data structure of the machine table, subscriber table, and affinity table in the registration processing of manually-operated registration (manually-operated registration 1);
Fig. 17 shows an example (example 2) of the data structure of the machine table, subscriber table, and affinity table in the registration processing of manually-operated registration (manually-operated registration 1);
Fig. 18 is a flowchart (flowchart 1) showing the flow of the registration processing of manually-operated registration (manually-operated registration 2) ;
Fig. 19 is a flowchart (flowchart 2) showing the flow of the registration processing of manually-operated registration (manually-operated registration 2);
Fig. 20 shows an example (example 1) of the data structure of the machine table, subscriber table, and affinity table in the registration processing of manually-operated registration (manually-operated registration 2);
Fig. 21 shows an example (example 2) of the data structure of the machine table, subscriber table, and affinity table in the registration processing of manually-operated registration (manually-operated registration 2);
Fig. 22 is a flowchart (flowchart 1) showing the flow of the registration processing of the pattern in which the IA terminal user management system and the ISP server converse;
Fig. 23 is a flowchart (flowchart 2) showing the flow of the registration processing of the pattern in which the IA terminal user management system and the ISP server converse;
Fig. 24 shows an example (example 1) of the data structure of the machine table, subscriber table, and affinity table in the registration processing of the pattern in which the IA terminal user management system and the ISP server converse;
Fig. 25 shows an example (example 2) of the data structure of the machine table, subscriber table, and affinity table in the registration processing of the pattern in which the IA terminal user management system and the ISP server converse;
Fig. 26 is a flowchart showing the flow of the registration processing of replacement due to breakdown (replacement 1: SID input not required);
Fig. 27 shows an example (example 1) of the data structure of the machine table, subscriber table, and affinity table in the registration processing of replacement due to breakdown (replacement 1: SID input not required);
Fig. 28 shows an example (example 2) of the data structure of the machine table, subscriber table, and affinity table in the registration processing of replacement due to breakdown (replacement 1: SID input not required);
Fig. 29 shows an example (example 3) of the data structure of the machine table, subscriber table, and affinity table in the registration processing of replacement due to breakdown (replacement 1: SID input not required);
Fig. 30 is a flowchart (flowchart 1) showing the flow of the registration processing of replacement due to breakdown (replacement 2: SID input required);
Fig. 31 is a flowchart (flowchart 2) showing the flow of the registration processing of replacement due to breakdown (replacement 2: SID input required);
Fig. 32 is a flowchart showing the flow of the registration processing of registration erasure;
Fig. 33 shows an example (example 1) of the data structure of the machine table, subscriber table, and affinity table in the registration processing of registration erasure;
Fig. 34 shows an example (example 2) of the data structure of the machine table, subscriber table, and affinity table in the registration processing of registration erasure;
Fig. 35 shows the block diagram of the IA terminal and the IA terminal user management system; and
Fig. 36 shows the loading of the program of the present invention onto a computer.

As already mentioned, a plurality of patterns (modes) are possible for registering an IA terminal (the procedure for beginning the utilization). Thus, a registration protocol which can cope with a plurality of patterns has been prepared, and a packaging of the DB (IA terminal database) layout and the IA terminal on the side of the server to realize this registration protocol has been prepared.

In view of this situation, the present invention employs the following constitution.

According to an embodiment of the present invention, an IA terminal user management system manages IA terminals connected via a network such as the Internet. It comprises an IA terminal user storage unit which stores IA terminal information including an IA terminal identifier for identifying the IA terminal, service information including the kind of service to be provided, and user registration information including user information concerning the user who receives the service; a transmission and receiving unit which transmits and receives the user registration information from and to the IA terminal, and requests the IA terminal to input the user registration information; a user registration information collation unit which collates the user registration information received by the transmission and receiving unit with the user registration information stored in the IA terminal user storage unit; and an automatic registration unit which obtains any user registration information not so collated from the IA terminal via the transmission and receiving unit, and registers the same in the IA terminal user storage unit.

Thereby, the effect is achieved that a user who is not acquainted with IA terminals, or a user who is using IA terminals for the first time, can easily register an IA terminal and his own information without changing the IA terminal or the software for controlling the IA terminal.

Also, in the IA terminal user management system of the present invention, it is desirable for the transmission and receiving unit to receive the user registration information including the IA terminal identifier from the IA terminal; for the user registration information collation unit to collate the received user registration information with the user registration information stored in the IA terminal user storage unit; for the transmission and receiving unit to transmit the collated result to the IA terminal and to receive additional user registration information which is not included in the received user registration information, from the IA terminal; and for the automatic registration unit to register the received additional user registration information into the IA terminal user storage unit.

In addition, in the IA terminal user management system of the present invention, it is desirable for the IA terminal user storage unit to comprise a machine table (database) which stores the IA terminal identifier in association with the user identifier for identifying the user; a subscriber table (database) which stores the user identifier in association with the service provider identifier for identifying the service provider who provides the service; and an affinity table (database) which stores the service provider identifier in association with the registration procedure for user registration determined by the service provider.

Further, it is preferable that the automatic registration unit be able to delete user registration information stored in the IA terminal user storage unit.

Moreover, according to an embodiment of the present invention, the IA terminal performs information communication via a network, and comprises a transmission and receiving unit which transmits and receives, via a network, IA terminal information including an IA terminal identifier for identifying the IA terminal, service information including the kind of service received, and user registration information including user information concerning the user who receives the service to and from the IA terminal user management system which manages the IA terminal; and an input unit for inputting missing user registration information based on the request from the IA terminal user management system, whereby the transmission and receiving unit transmits the user registration information inputted by the input unit to the IA terminal user management system. The above-mentioned effect is thereby achieved.

Also, in the IA terminal of the present invention, it is desirable for the transmission and receiving unit to transmit user registration information including the IA terminal identifier; for the transmission and receiving unit to receive the results of having collated the transmitted user registration information with the user registration information stored in the IA terminal user storage unit provided in the IA terminal user management system from the IA terminal user management system; for the input unit to input additional user registration information which is not included in the received user registration information; and for the transmission and receiving unit to transmit the inputted additional user registration information to the IA terminal user management system.

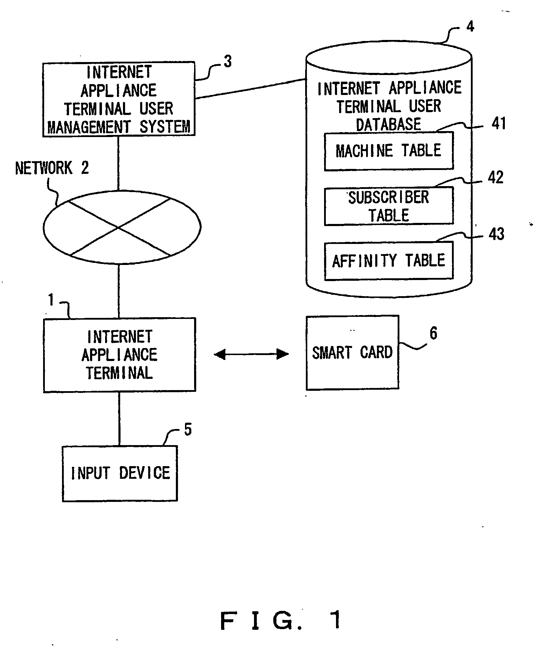

Fig. 1 shows the overall configuration including the IA terminal and IA terminal user management system to which the present invention applies.

In Fig. 1, the IA terminal 1 which performs information communication and the IA terminal user management system 3 which manages the IA terminal 1 are connected to each other via a network such as the Internet, a wireless communication network, etc.

The IA terminal 1 comprises a transmission and receiving unit which transmits and receives, via the network 2, IA terminal information including an IA terminal identifier for identifying the IA terminal, service information including the kind of service to be received, and user registration information including user information concerning the user who receives the service, to and from the IA terminal user management system 3 which manages the IA terminal; and an input unit 5 such as a keyboard which can be used to input user registration information based on the request from the IA terminal user management system. The IA terminal 1 can read information stored in a smart card 6.

The transmission and receiving unit transmits the user registration information read from the smart card 6 and the user registration information inputted by the input unit 5 to the IA terminal user management system 3.

More specifically, the transmission and receiving unit transmits the user registration information including the IA terminal identifier to the IA terminal user management system 3 and receives therefrom the results of collation of the transmitted user registration information with the user registration information stored in the IA terminal user database 4 provided in the IA terminal user management system 3.

The user employs input unit 5 to input additional user registration information which is not included in the received user registration information, and the transmission and receiving unit transmits it to the IA terminal user management system 3.

The IA terminal user management system 3 has an IA terminal user database 4 which stores IA terminal information including an IA terminal identifier for identifying the IA terminal 1, service information including the kind of service to be provided, and user registration information including user information concerning the user who receives the service.

The IA terminal user database 4 has a machine table 41 which stores the IA terminal identifier in association with the user identifier for identifying the user, a subscriber table 42 which stores the user identifier in association with a service provider identifier for identifying the ISP (or ASP) and an affinity table 43 which stores the service provider identifier in association with the registration procedure for user registration determined by the service provider.

The IA terminal user management system 3 transmits and receives the user registration information from and to the IA terminal 1, and the IA terminal user management system 3 comprises a transmission and receiving unit which requests the IA terminal 1 to input the user registration information, a user registration collation unit which collates the user registration information received by the transmission and receiving unit with the user registration information stored in the IA terminal user database 4, and an automatic registration unit which obtains the user registration information which was not collated by the user registration information collation unit from the IA terminal 1 via the transmission and receiving unit and registers said user registration information into the IA terminal user database 4.

The transmission and receiving unit receives user registration information including the IA terminal identifier from the IA terminal 1, and the user registration information collation unit collates the received user registration information with the user registration information stored in the IA terminal user database 4. The transmission and receiving unit transmits the collated results to the IA terminal 1, and receives the missing user registration information from the IA terminal.

The automatic registration unit registers the received additional user registration information into the IA terminal user database 4, and can also delete the user registration information from the database 4.

The IA terminal user management system 3 which is configured in such a way as mentioned above receives known information (information which the IA terminal 1 has, or information read from the smart card 6 in some cases) from the IA terminal 1, and tries to complete user registration as a first step. If not successful (if the registration has not finished), it prompts the user to enter the missing information at the IA terminal 1.

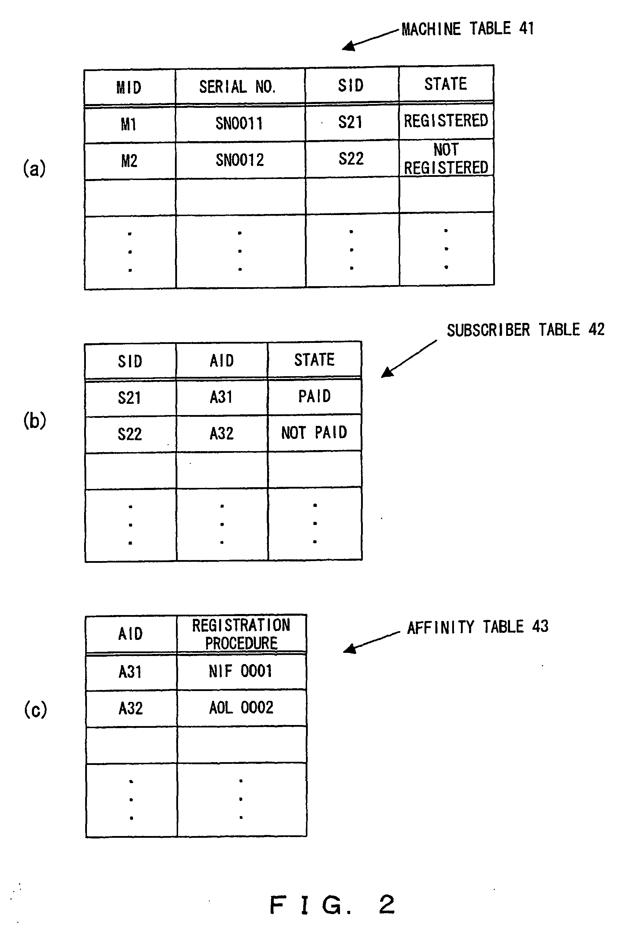

Fig. 2 shows the data structure of the machine table, subscriber table, and affinity table of which the IA terminal user database is composed.

In Fig. 2, (a) shows the data structure of the machine table 41, (b) shows the data structure of the subscriber table 42, and (c) shows the data structure of the affinity table 43.

"MID" in the machine table 41 is the machine identifier (Machine Identifier) given to uniquely identify the IA terminal 1 as hardware. "Serial No." is the serial number given to the IA terminal 1 by its provider (its manufacturer or its seller). "SID" is the subscriber identifier (Subscriber Identifier) given to uniquely identify the user (the person who uses and is charged for the IA terminal 1). "State" is the state of the IA terminal 1 (namely, registered, not yet registered, breakdown, etc.).

"SID" in the subscriber table 42 is the subscriber identifier given to uniquely identify the user of the IA terminal 1, as is the case with "SID" in the machine table 41. "AID" in the subscriber table 42 is the affinity identifier (Affinity Identifier) given to uniquely identify the combination of an Internet service provider (ISP: Internet Service Provider) which the user of the IA terminal 1 uses and an application service provider (ASP: Application Service provider). "State" in the subscriber table 42 is the state of the service which the ISP or ASP provides.

"AID" in the affinity table 43 is the same as in the subscriber table 42. "Registration procedure" is the contents of the procedure for user registration.

The IA terminal user database 4 which is composed of said items is managed by the IA terminal user management system 3.

Information (data) is registered in the above tables in advance according to various kinds of registration processing patterns which will be described later.

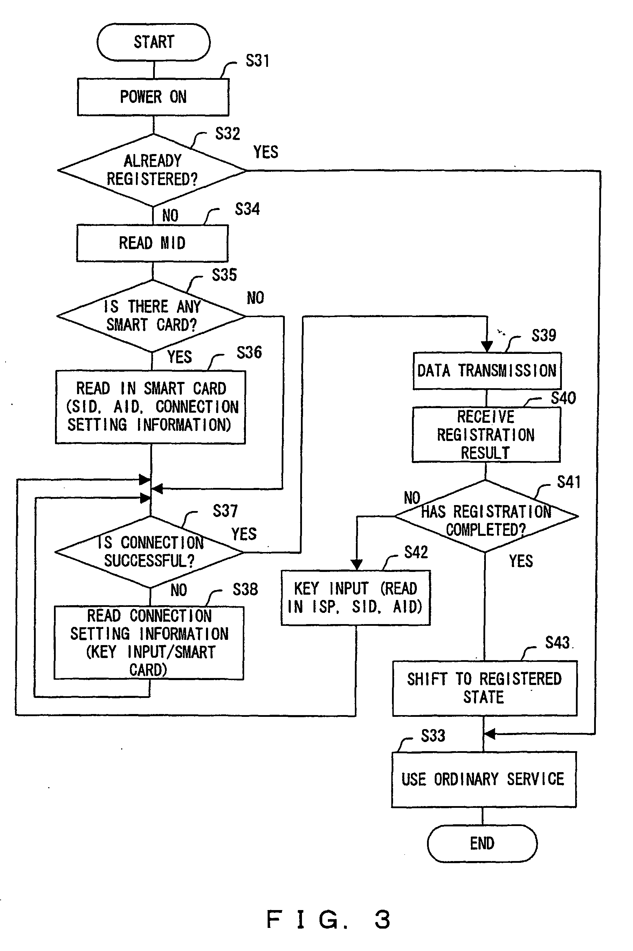

Fig. 3 is a flowchart indicating the flow of the registration processing which is executed in the IA terminal.

First, turn on the power supply of the IA terminal 1 in step S31.

Then, check the registered flag (which is the flag indicating whether user registration has been made, and indicating 1 if already registered, and 0 if not yet registered) stored in the internal memory of the IA terminal 1, and judge whether user registration has been made, in step S32.

If it is judged that user registration has not been made yet in step S32 (step S32: NO), use ordinary service provided by ISP or ASP via the network 2.

If it is judged that user registration has already been made in step S32 (step S32: YES), read a machine identifier (MID: Machine Identifier) for uniquely identifying the IA terminal 1 as hardware in step S34.

Then, judge whether there is a smart card (for example, whether the IA terminal 1 even has a smart card facility, or if so whether a card is inserted) in step S35.

If it is judged that there is no smart card (step 35: NO), proceed to step S37.

If it is judged that there is a smart card in step S35 (step 35: YES), read the information including the SID, AID, and connection setting information which is the setting information for connecting the information home appliance to the IA terminal user management device 3, which is all stored in the smart card, in step S36.

After reading the information which is stored in the smart card in step S36, or after it is judged that there is no smart card in step S35, try to connect the IA terminal to the IA terminal user management system 3, and judge whether this is successful in step S37.

If it is not successful (the connection failed) (step S37: NO), input the connection setting information from an input device such as a keyboard (or read the smart card again), and try to do the connection again.

If the connection is successful (step S37:YES), transmit data required for user registration to the IA terminal management 3 in step S39, and receive registration results from the IA terminal user management system 3.

Then, judge whether the user registration has been completed in step S41.

If not completed (if it is judged that data required for registration is insufficient) (step S41: NO), input the data still required for registration (ISP, SID, AID, etc.) from an input device such as a keyboard in step S42, and try to connect the IA terminal 1 to the IA terminal user management system 3 again.

If completed (step S41: YES), shift to a "registered" state the contents of the IA terminal user database 4 with which the IA terminal user management system 3 is provided in step S43.

Then, provide the user with normal Internet access (ordinary service) from the ISP and ASP via a network (step S33).

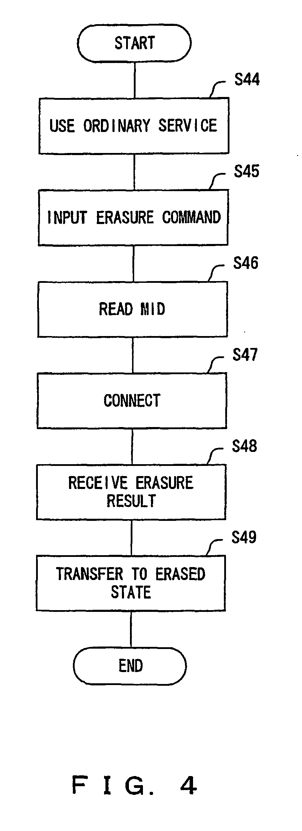

Fig. 4 is a flowchart of the erasure processing executed by the IA terminal.

Ordinary service which is provided from the ISP and ASP via a network is used in step S44.

Input commands for erasing the user registration in step S45 and read MID in step S46.

Next, connect the IA terminal 1 to the IA terminal user management system 3 in step S47, and transmit the erasure commands inputted in step S45 and MID read step S46.

Then, since the erasure result is transmitted from the IA terminal user management system 3, receive the transmitted erasure result in step S48 and shift to an erased state the contents of the IA terminal user database 4 with which the IA terminal user management device 3 is provided.

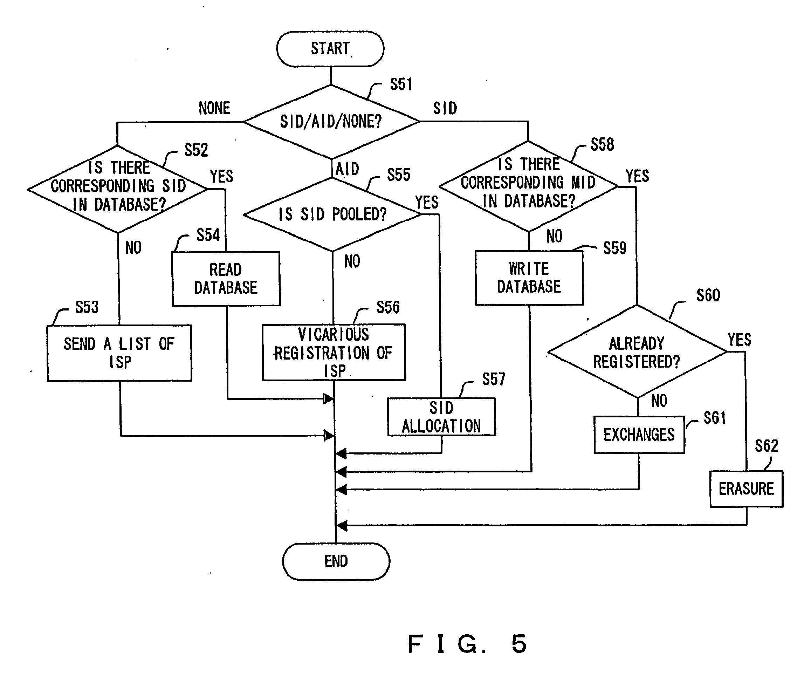

Fig. 5 is a flowchart of the processing executed by the IA terminal user management system.

Judge whether there is SID or AID, or there is no SID, nor AID, in the data transmitted from the IA terminal 1 in step S51.

If it is judged that there is no SID, nor AID in step 51 (step S51: none), judge whether there is SID to which MID corresponds in the IA terminal user database 4 in step S52. If it is judged that there is no such SID in step S52 (step S52: NO), transmit a list of ISP to the IA terminal 1 in step S53.

If it is judged that there is said SID in step S52 (step S52: YES), read the IA terminal user database 4 in step S54.

If it is judged that there is said AID in step S51 (step S51: YES), judge whether SID is pooled in step S55.

If it is judged that SID is not pooled in step S55 (step S55: NO), let the ISP (or ASP) interactively make user registration in step S56 (receive the response of MID and AID; take a vicarious procedure (procedure via an agent or proxy) for the ISP in place of AID; allocate SID to the new user information of the registration result; and associate the SID with the MID).

If it is judged that SID is pooled in step S55 (step S55: YES), allocate the SID pooled in each AID to the MID in step S57.

If it is judged that there is SID in step S51 (step S51: SID), judge whether there is MID corresponding to the IA terminal database 4 in step S58.

If it is judged that there is no MID in step S58 (step S58 : NO), write SID in the IA terminal user database 4 in step S59.

If it is judged that there is MID in step S58 (step S58: YES), judge whether user registration has already been made in step S60.

If it is judged that user registration has not been made yet in step S60 (step S60: NO), exchange data concerning the IA terminal 1 in step S61.

If it is judged that user registration has already been made in step S60 (step S60: YES), erase the data concerning the IA terminal 1 in step S62.

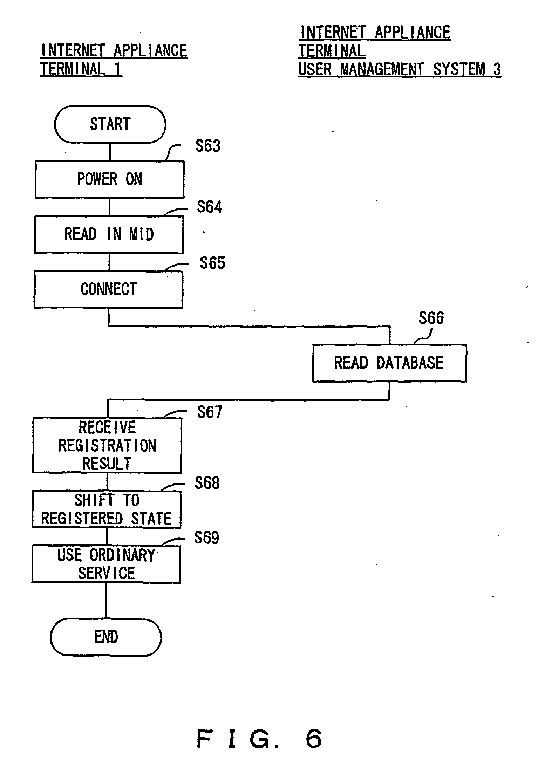

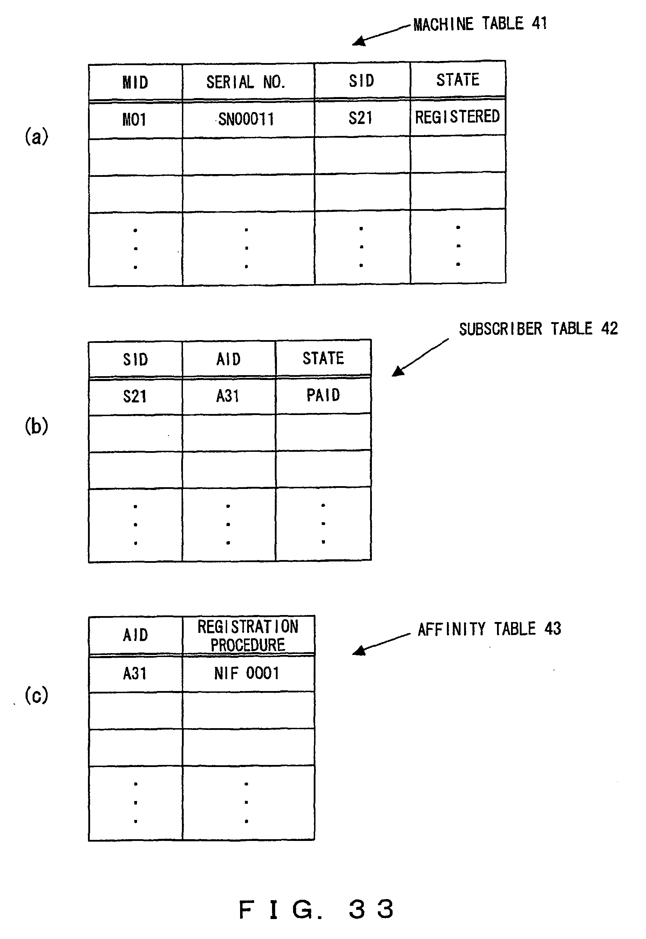

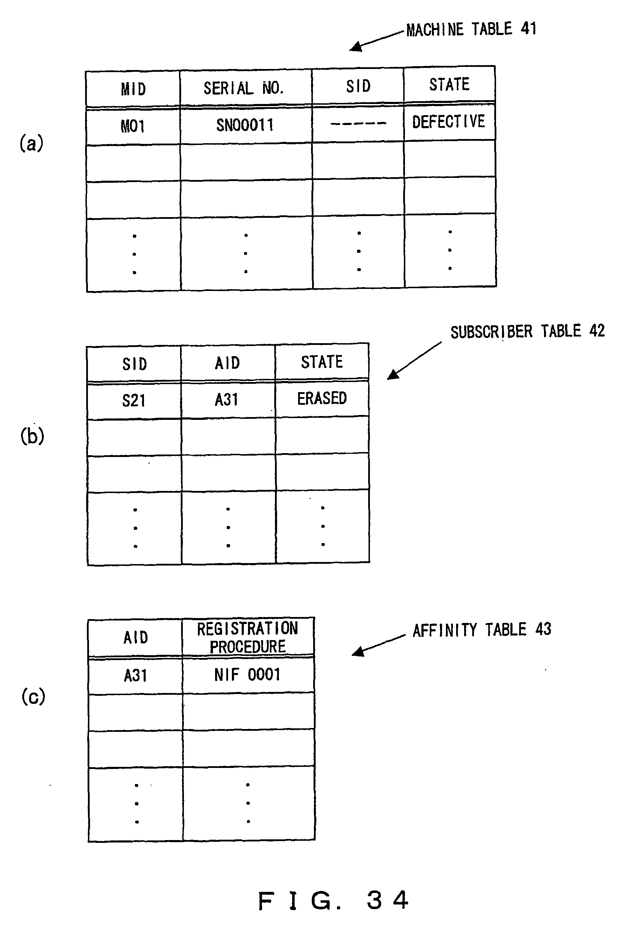

Described below are the first embodiment and the 10th embodiment to which the present invention applies with reference to Fig. 6 through Fig. 34.

Prior to explanations of these embodiments, described hereunder are registration patterns of user registration.

### (1) Fully automatic registration

Fully automatic registration is executed when an IA terminal can be associated with a user who uses said terminal in advance.

For example, information concerning the IA terminal, the contents of the service that ISP and ASP provides, and information concerning the user who uses the IA terminal are set to the IA terminal user management system in advance, and a specific IA terminal is provided to a specific user according to theses pieces of information (Example 1).

Also, when an IA terminal is delivered to a user at a dealer's shop, information concerning the IA terminal, the contents of the service that ISP and ASP provide, and information concerning the user who uses the IA terminal is set to the IA terminal user management system in advance (Example 2).

### (2) Semi-fully automatic registration

Semi-fully automatic registration is executed when an IA terminal can be associated with a user who uses said terminal when user registration is made.

For example, the contents of the service that ISP and ASP provides and information concerning the user who uses the IA terminal are set to the IA terminal user management system in advance, and information of the IA terminal provided to the user is gathered when user registration is made. This is because which IA terminal is provided to the user is unknown.

### (3-1) Smart card registration (smart card registration 1)

Smart card registration (smart card registration 1) is executed when a smart card recording the information which identifies a user is used.

For example, the service which ISP and ASP provide and information of the user who receives the service is set to the IA terminal user management system in advance, information which identifies the user is recorded in the smart card and is provided to the user in advance, and the information identifying the user in the smart card as well as information of the IA terminal provided to the user are gathered when user registration is made. Although which IA terminal is provided to the user is unknown, the smart card is provided to specific users by means of DM (direct mailing).

### (3-2) Smart card registration (smart card registration 2)

Smart card registration (smart card registration 2) is executed when a smart card recording the information of ISP and ASP to be used is used.

For example, the service which ISP and ASP provide and information on the user who receives information of this service are set to the IA terminal user management system in advance, information identifying the ISP and ASP to be used and setting information required for connection are recorded in the smart cad and are provided to the user in advance, and information identifying the ISP and ASP to be used and setting information required for connection which are recorded in the smart card as well as information of the IA terminal provided to the user are gathered when user registration is made. Which IA terminal is provided to the user is unknown, and the smart card is common to each user.

### (4-1) Manually-operated registration (manually-operated registration 1)

Manually-operated registration (manually-operated registration 1) is executed when information required for SID and connection is manually inputted.

For example, service and information on a provisional user are set to the IA terminal user management system in advance, the information identifying the service and user as well as information of the IA terminal provided to the user are gathered when user registration is made. Although which IA terminal is provided to the user is unknown, information identifying the user and information required for connection can be sent to the user, and the user can manually input these pieces of information.

### (4-2) Manually-operated registration (manually-operated registration 2)

Manually-operated registration (manually-operated registration 2) is executed when information on ISP and ASP to be used is manually inputted.

For example, service and information on a provisional user are set to the IA terminal user management system in advance, the information identifying the service as well as information of the IA terminal provided to the user are gathered when user registration is made. Which IA terminal is provided to the user is unknown, and the limit of using the service is pooled in advance.

### (5) Pattern in which the IA terminal user management system converses with the server of ISP

The pattern in which the IA terminal user management system converses with the server of ISP is executed when ISP and ASP to be used are selected when they are connected to the IA terminal user management system.

For example, nothing is set to the IA terminal user management system in advance, the service which ISP and ASP provide and information identifying the user who receives this service as well as the information of the IA terminal provided to the user are gathered when user registration is made. Which IA terminal is provided to the user is not known, nor is the limit of using the service pooled in advance.

### (6) Breakdown replacement

Breakdown replacement is executed when the IA terminal is replaced for the reason of breakdown, etc.

For example, the IA terminal user management system is informed of the information identifying a new IA terminal as well as user identification information. The IA terminal user management system associates user information which has already been registered with information on the new IA terminal, the state is changed to a "not yet registered" state, and an old terminal appliance terminal which has been associated with the user information which has already been registered is managed as a defective IA terminal. Then, when a fully automatic registration request is made to the IA terminal user management system at a new IA terminal which has not been registered yet, the IA terminal user management system transmits the user information to the IA terminal and changes the state to an "already registered" state.

In order to avoid the leakage of personal information occurring due to the robbery of an IA terminal when it is replaced, when a registration request is made to the IA terminal user management system at a new IA terminal which has not been registered yet, the owner of the IA terminal can be confirmed by manually inputting SID or inserting the smart card which records SID, but this measure can be also provided in the procedure of initial registration.

### (7) Registration erasure

Registration erasure is executed when service has become unused.

For example, the state of the IA terminal which the IA terminal manages is changed to a "not yet registered" state, and information of the IA terminal and user information are transmitted to the IA terminal user management system. The IA terminal user management system releases the association of the IA terminal which is recorded in the IA terminal user database with the user, and stops providing the subsequent service.

Described hereunder is the registration processing of fully automatic registration which is the first embodiment to which the present invention applies with reference to Fig. 6 through Fig. 8.

Fig. 6 is a flowchart indicating the flow of the registration processing of fully automatic registration.

Fully automatic registration means that all the information has already been registered, and the association of MID and SID has been completed.

First, turn on the power supply (ON) of the IA terminal 1 in step S63.

Since the registered flag stored in the internal memory of the IA terminal 1 has not been registered yet (e.g. 0 is stored), read the identifier (MID) given to uniquely identify the IA terminal 1 as hardware in step S64.

Also, connect the IA terminal 1 to the IA terminal user management system 3 in step S65.

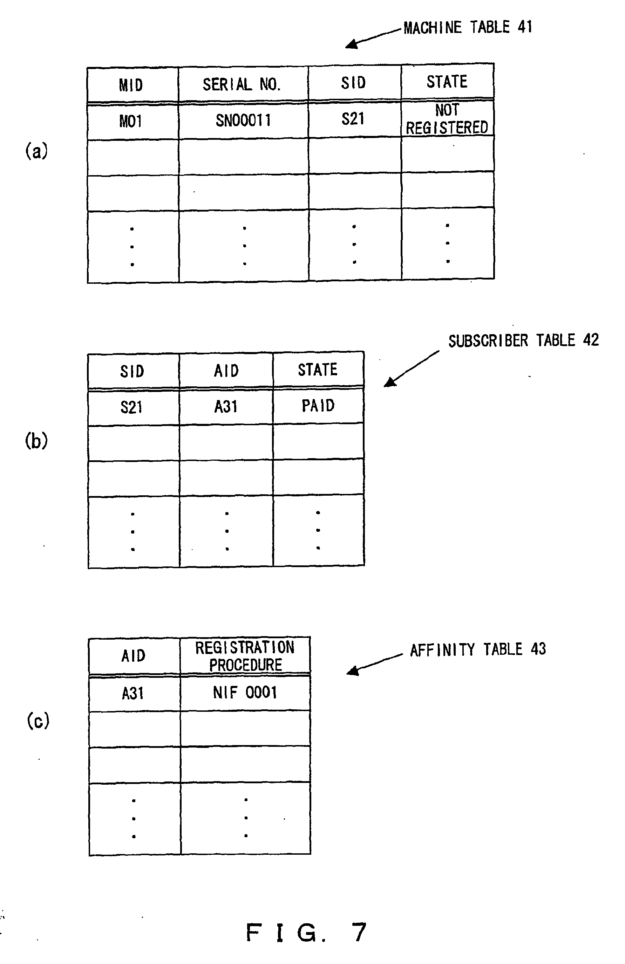

Then, the IA terminal user management system 3 connected to the IA terminal 1 reads the IA terminal user database 4 (refer to Fig. 7) in step S66.

The IA terminal 1 receives the registration result from the IA terminal user management system 3 in step S67.

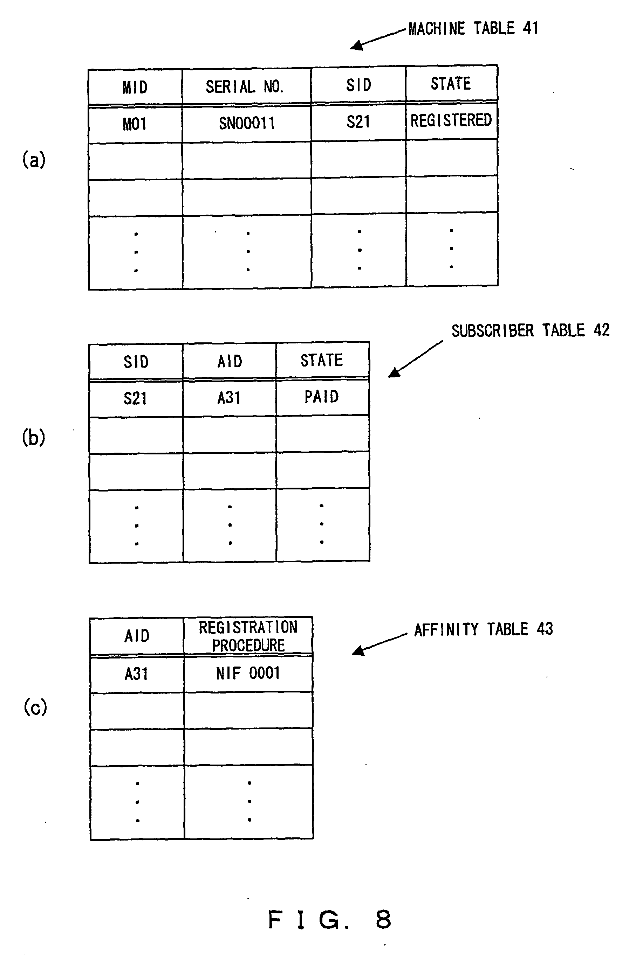

Shift the contents of the IA terminal user database 4 with which the IA terminal user management system 3 is provided to an "registered" state in step S68 (refer to Fig.8).

After that, use ordinary service provided from ISP and ASP via a network (step S69).

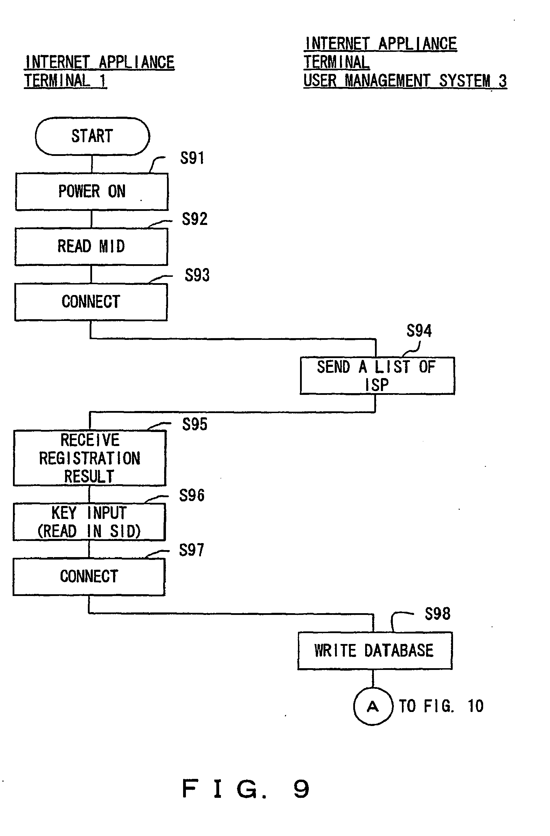

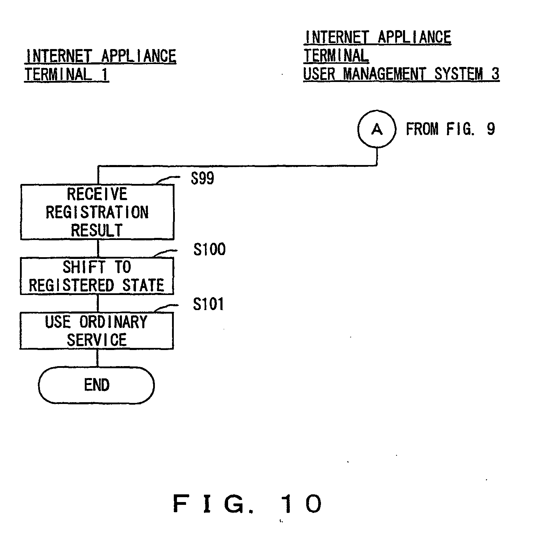

Described hereunder is the registration processing of semi-fully automatic registration which is the second embodiment to which the present invention applies with reference to Fig. 9 and Fig. 10.

Fig.9 and Fig. 10 are flowcharts showing the flow of the registration processing of semi-fully automatic registration.

First, turn on the power supply of the IA terminal 1 (ON) in step S91.

Since the registered flag stored in the internal memory of the IA terminal 1 has not been registered yet (e.g. 0 is stored), read the identifier (MID) given to uniquely identify the IA terminal 1 as hardware in step S92.

Also, connect the IA terminal 1 to the IA terminal user management system 3 in step S93.

Then, the IA terminal user management system 3 connected to the IA terminal 1 transmits a list of ISP to the IA terminal in step S94.

The IA terminal user management system 3 connected to the IA terminal 1 receives the registration result (a list of ISP) from the IA terminal user management system 3 in step S95.

Since user registration has not been completed yet, input insufficient data (SID) required for user registration from an input device such as a keyboard in step S96.

Connect the IA terminal 1 to the IA terminal user management system 3 again in step S97.

Then, the IA terminal user management system 3 connected to the IA terminal 1 writes in the IA terminal user database 4 in step S98.

The IA terminal 1 receives the registration result from the IA terminal user management system 3 in step 99 (refer to Fig. 10).

Shift the contents of the IA terminal user database 4 with which the IA terminal user management system 3 is provided to an "registered" state in step S110.

After that, use ordinary service provided from ISP and ASP via a network (step S101).

Described below is the smart card registration (smart card registration 1) which is the third embodiment to which the present invention applies.

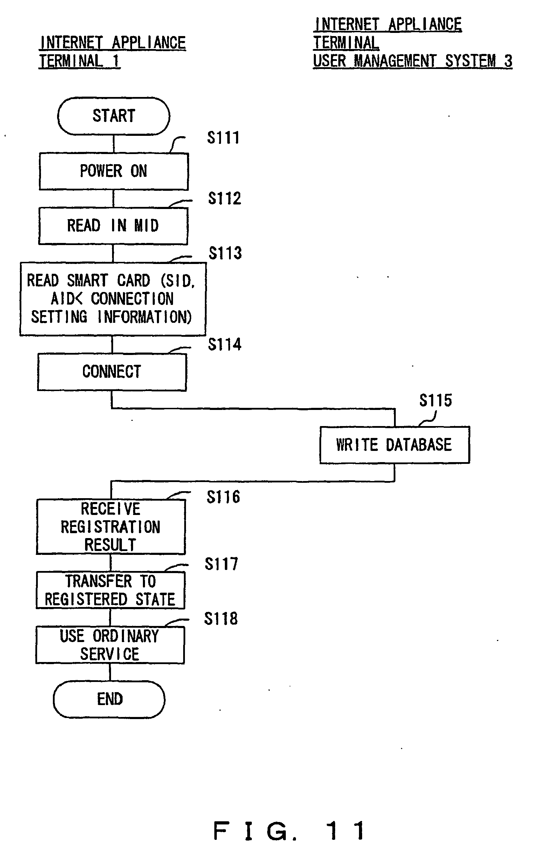

Fig. 11 is a flowchart showing the flow of the registration processing of smart card registration (smart card registration 1).

First, turn on the power supply of the IA terminal 1 (ON) in step S111.

Since the registered flag stored in the internal memory of the IA terminal 1 has not been registered yet (e.g. 0 is stored), read the identifier (MID) given to uniquely identify the IA terminal 1 as hardware in step S112.

Since there is a smart card, read a subscriber identifier (SID) given to uniquely identify the user who uses the IA terminal 1 (the unit of charge for the IA terminal 1) stored in the smart card, an affinity identifier (AID) given to uniquely identify the combination of ISP and ASP which the user of the IA terminal 1 uses, and information including the connection setting information which is setting information for connecting the IA terminal 1 to the IA terminal user management system 3 in step S113.

Then, connect the IA terminal 1 to the IA terminal user management system 3 in step S114.

The IA terminal user management system 3 connected to the IAterminal 1 writes in the IA terminal user database 4 in step S115.

In step S116, the IA terminal 1 receives the registration result from the IA terminal user management system 3.

Shift the contents of the IA terminal user database 4 with which the IA terminal user management system 3 is provided to an "registered" state in step S117.

After that, use ordinary service provided from ISP and ASP via the network 2 (step S118).

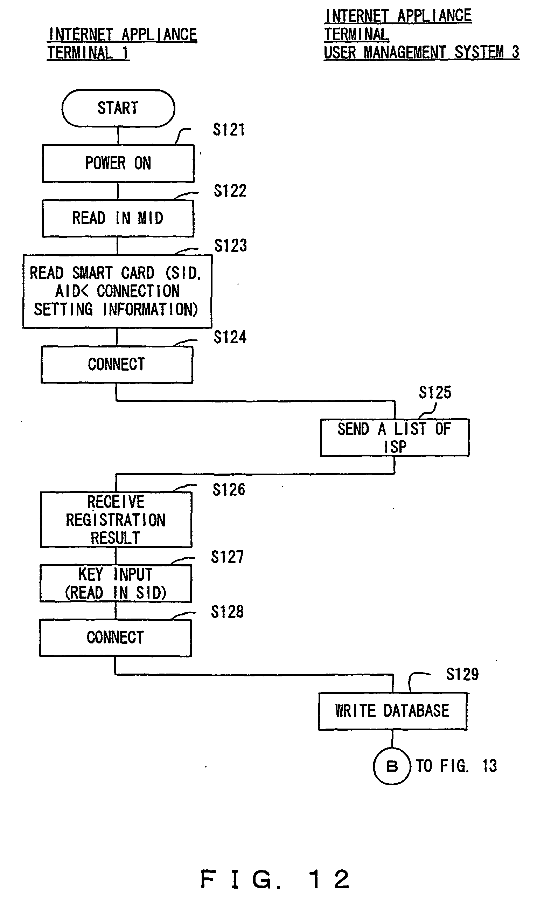

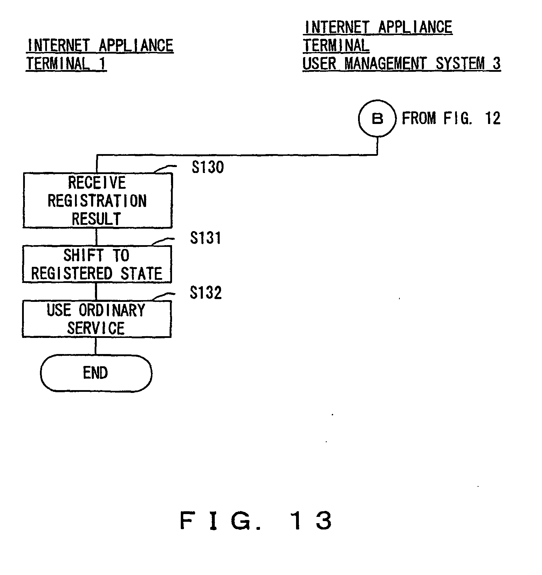

Described hereunder is the smart card registration (smart card registration 2) which is the fourth embodiment to which the present invention applies with reference to Fig. 12 and Fig. 13.

Fig. 12 and Fig. 13 are flowcharts showing the flow of the registration processing of smart card registration (smart card registration 2).

First, turn on the power supply of the IA terminal 1 (ON) in step S121.

Since the registered flag stored in the external memory of the IA terminal has not been registered (e.g. 0 (zero) is stored), read the machine identifier (MID) given to uniquely identify the IA terminal as hardware in step S122.

Since there is a smart card, read a subscriber identifier (SID) given to uniquely identify the user who uses the IA terminal 1 (the unit of charge for the IA terminal 1) stored in the smart card, an affinity identifier (AID) given to uniquely identify the combination of ISP and ASP which the user of the IA terminal 1 uses, and information including the connection setting information which is setting information for connecting the IA terminal 1 to the IA terminal user management system 3 in step S123.

Then, connect the IA terminal 1 to the IA terminal user management system 3 in step S124.

Then, the IA terminal user management system 3 connected to the IA terminal 1 transmits a list of ISP to the IA terminal in step S125.

The IA terminal user management system 3 connected to the IA terminal 1 receives the registration result (a list of ISP) from the IA terminal user management system 3 in step S126.

Since registration has not been completed yet, input insufficient data required for user registration (SID) from an input device such as a keyboard in step S127.

Connect the IA terminal 1 to the IA terminal user management system 3 again in step S128.

Then, the IA terminal user management system 3 connected to the IA terminal 1 writes in the IA terminal terminal user database 4 in step S129.

The IA terminal 1 receives the registration result from the IA terminal user management system 3 in step S130

Shift the contents of the IA terminal user database 4 with which the IA terminal user management system 3 is provided to an "registered" state in step S131.

After that, use ordinary service provided from ISP and ASP via a network (step S132).

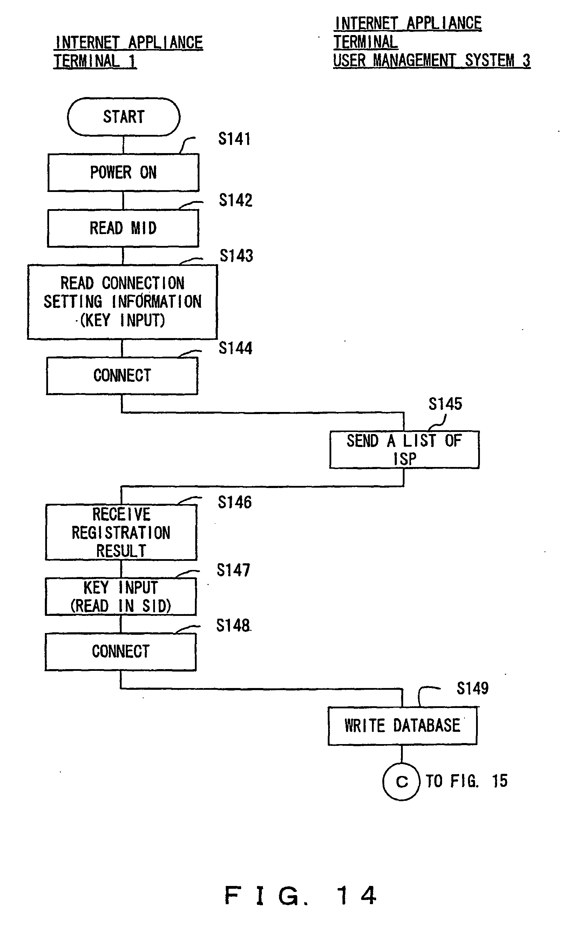

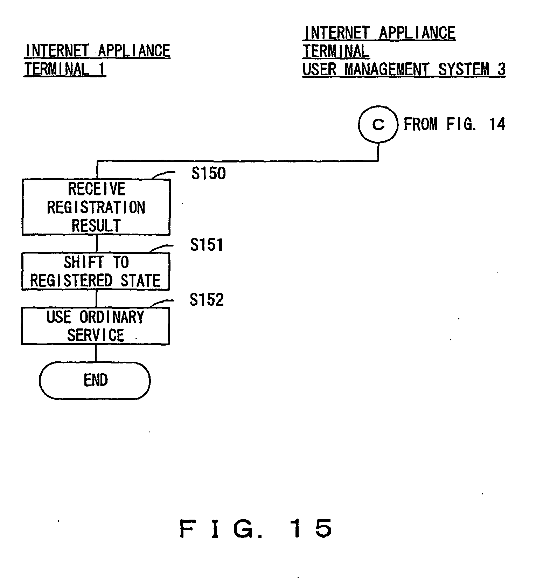

Described hereunder is the manually-operated registration (manually-operated registration 1) which is the fifth embodiment to which the present invention applies with reference to Fig. 14 through Fig. 17.

Fig. 14 and Fig. 15 are flowcharts showing the flow of the registration processing of manually-operated registration (manually-operated registration 1).

In the manually-operated registration (manually-operated registration 1), all the information has already been registered, but the association of MID and SID has not been completed.

First, turn on the power supply of the IA terminal 1 (ON) in step S411.

Since the registered flag stored in the internal memory of the IA terminal 1 has not been registered yet (e.g. 0 is stored), read the identifier (MID) given to uniquely identify the IA terminal 1 as hardware in step S142.

Input information including the connection setting information which is the setting information for connecting the IA terminal 1 to the IA terminal user management system 3 from an input device such as a keyboard in step S143.

Connect the IA terminal 1 to the IA terminal user management system 3 in step S144.

Then, the IA terminal user management system 3 connected to the IA terminal 1 transmits a list of ISP to the IA terminal 1 in step S145.

The IA terminal user management system 3 connected to the IA terminal 1 receives the registration result (a list of ISP) from the IA terminal user management system 3 in step S146.

Since user registration has not been completed yet, input insufficient data (SID) required for user registration from an input device such as a keyboard in step S147.

Connect the IA terminal 1 to the IA terminal user management system 3 again in step S148.

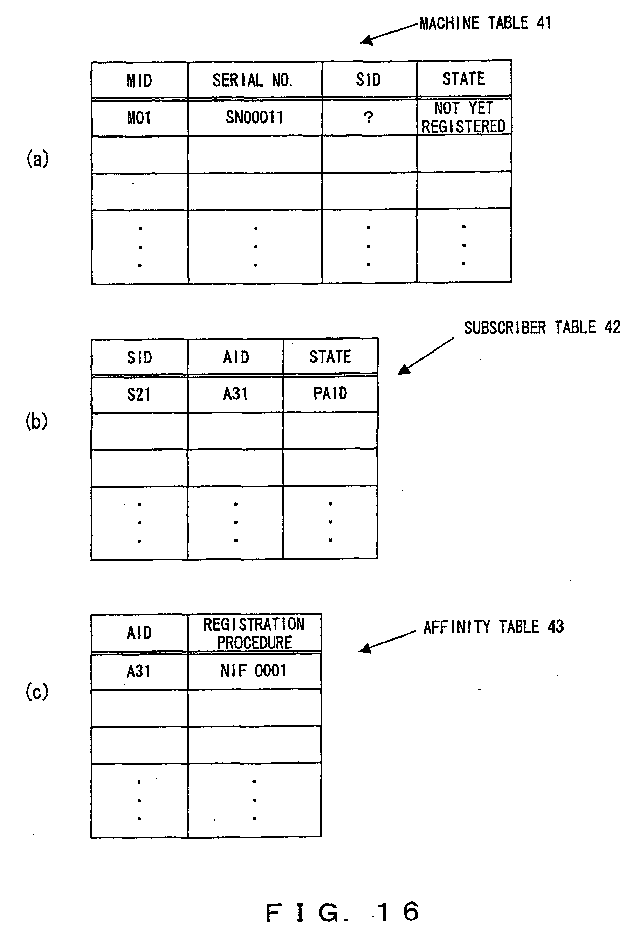

Then, the IA terminal user management system 3 connected to the IA terminal 1 writes in the IA terminal user database 4 in step S149 (refer to Fig. 16).

In Fig. 15, the IA terminal 1 receives the registration result from the IA terminal user management system 3 in step S150.

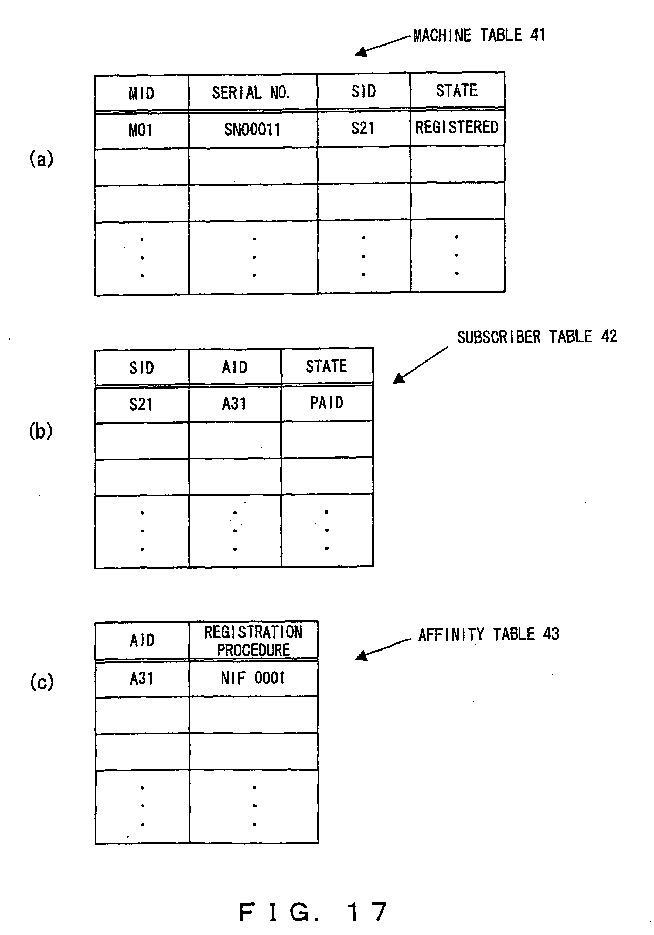

Shift the contents of the IA terminal user database 4 with which the IA terminal user management system 3 is provided to an "registered" state in step S151 (refer to Fig. 17).

After that, use ordinary service provided from ISP and ASP via a network (step S152).

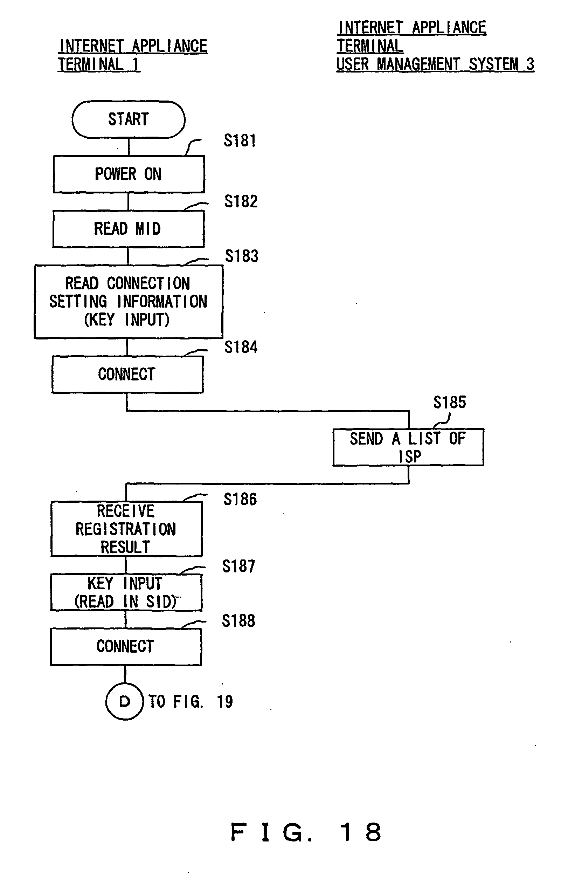

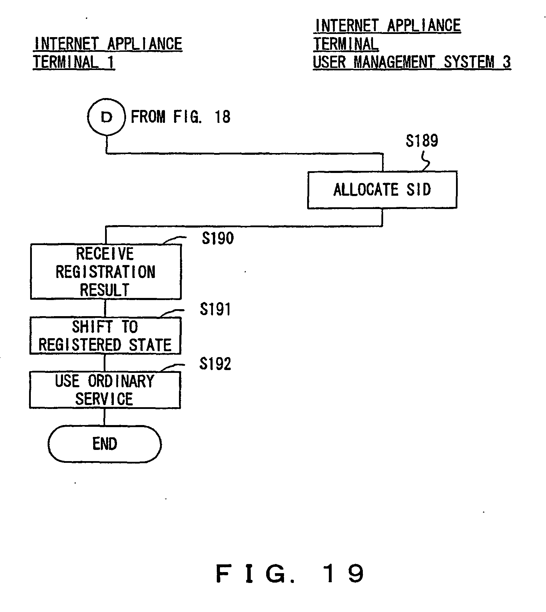

Described hereunder is the manually-operated registration (manually-operated registration 2) which is the sixth embodiment to which the present invention applies with reference to Fig. 18 through Fig. 21.

Fig. 18 and Fig. 19 are flowcharts showing the flow of the registration processing of manually-operated registration (manually-operated registration 2).

In the manually-operated registration (manually-operatedregistration2), MIDhas alreadybeen registered, but SID is only pooled for each AID.

First, turn on the power supply of the IA terminal 1 (ON) in step S181.

Since the registered flag stored in the internal memory of the IA terminal 1 has not been registered yet (e.g. 0 is stored), read the machine identifier (MID) given to uniquely identify the IA terminal 1 as hardware in step S182.

Input information including the connection setting information which is the setting information for connecting the IA terminal 1 to the IA terminal user management system 3 from an input device such as a keyboard in step S183.

Connect the IA terminal 1 to the IA terminal user management system 3 in step S184.

Then, the IA terminal user management system 3 connected to the IA terminal 1 transmits a list of ISP to the IA terminal 1 in step S185.

The IA terminal user management system 3 connected to the IA terminal 1 receives the registration result (a list of ISP) from the IA terminal user management system 3 in step S186.

Since user registration has not been completed yet, input insufficient data (SID) required for user registration from an input device such as a keyboard in step S187.

Connect the IA terminal 1 to the IA terminal user management system 3 again in step S188.

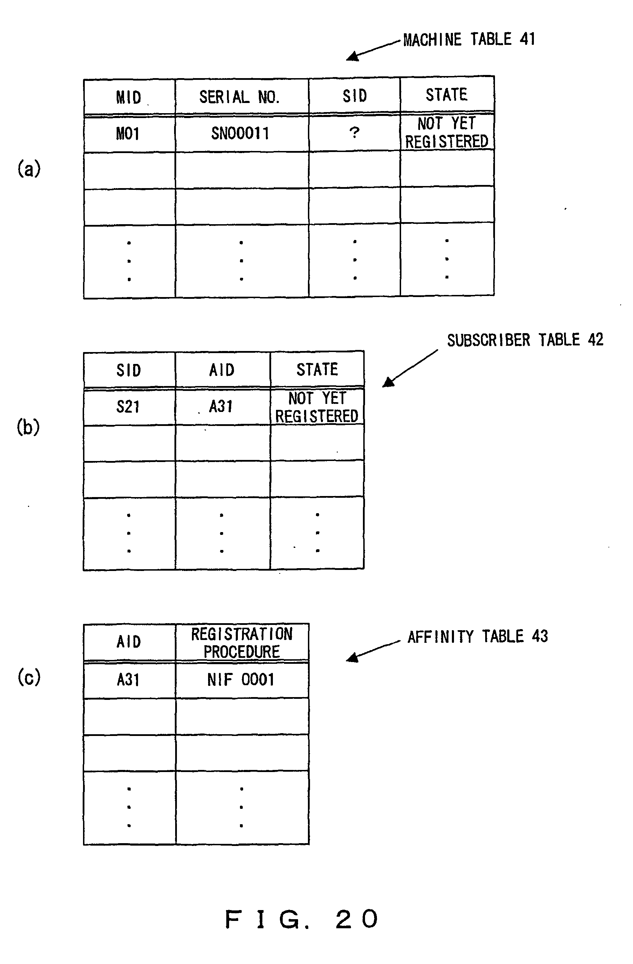

In Fig. 19, the IA terminal user management system 3 connected to the IA terminal 1receives the correspondence of MID and AID, and allocates the MID pooled for each AID to MID in step 189 (refer to Fig. 20).

The IA terminal 1 receives the registration result from the IA terminal user management system 3 in step S190.

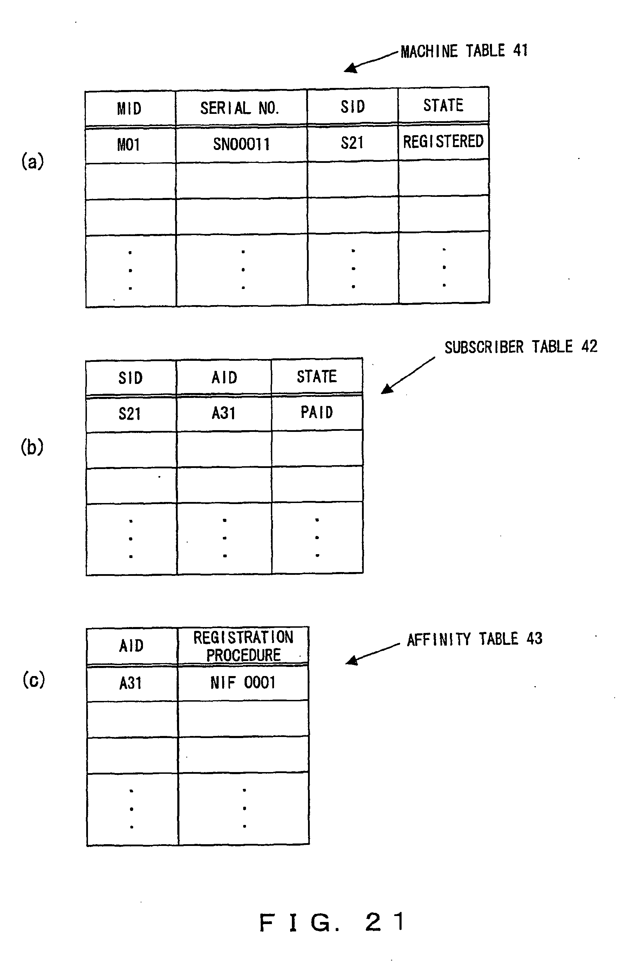

Shift the contents of the IA terminal user database 4 with which the IA terminal user management system 3 is provided to an "registered" state in step S191 (refer to Fig. 21).

After that, use ordinary service provided from ISP and ASP via a network (step S192).

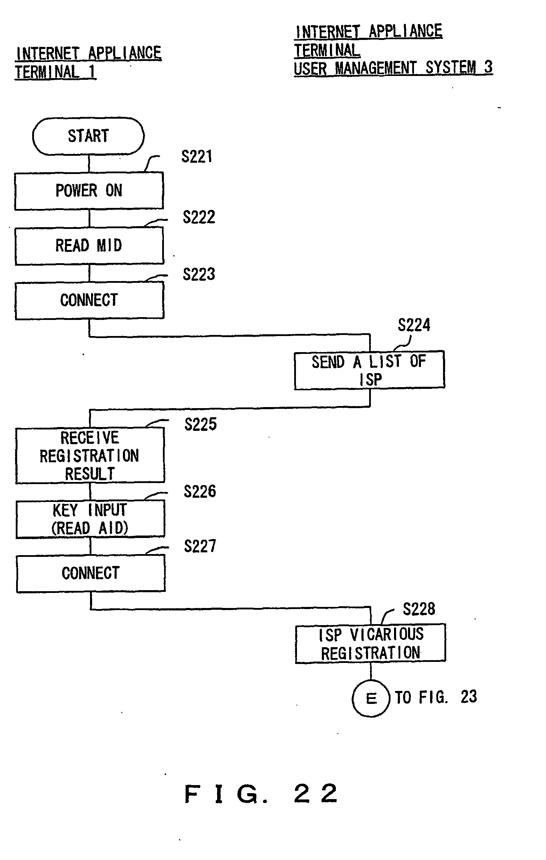

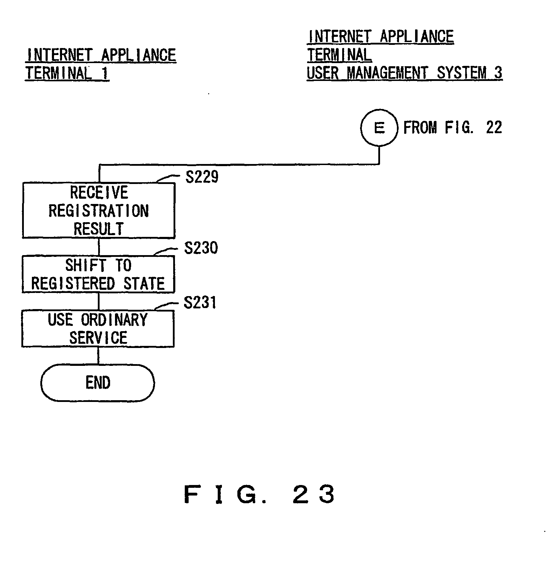

Described next is the pattern in which the IA terminal user management system which is the seventh embodiment to which the present invention applies converses with the server of ISP with reference to Fig. 22 through Fig. 25.

Fig. 22 and Fig. 23 are flowcharts showing the flow of the registration processing of the pattern in which the IA terminal user management system converses with the ISP server.

In the registration processing of the pattern in which the IA terminal user management system converses with the ISP server, MID has already been registered, but SID has not been registered yet.

First, turn on the power supply of the IA terminal 1 (ON) in step S221.

Since the registered flag stored in the internal memory of the IA terminal 1 has not been registered yet (e.g. 0 is stored), read the machine identifier (MID) given to uniquely identify the IA terminal 1 as hardware in step S222.

Connect the IA terminal 1 to the IA terminal user management system 3 in step S223.

Then, the IA terminal user management system 3 connected to the IA terminal 1 transmits a list of ISP to the IA terminal 1 in step S224.

The IA terminal user management system 3 connected to the IA terminal 1 receives the registration result (a list of ISP) from the IA terminal user management system 3 in step S225.

Since registration has not been completed yet, input insufficient data (AID) required for user registration from an input device such as a keyboard in step S226.

Connect the IA terminal 1 to the IA terminal user management system 3 again in step S227.

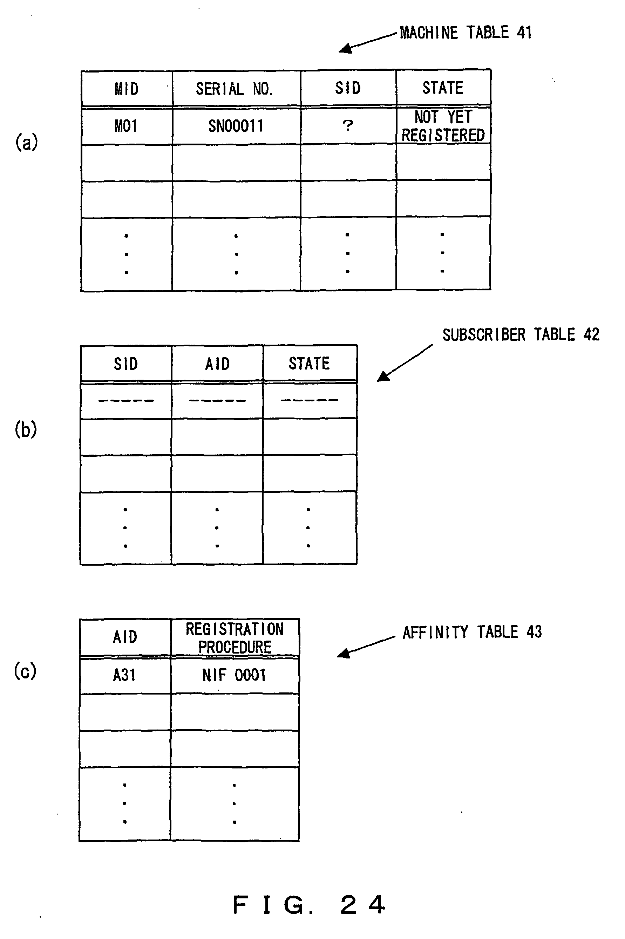

The IA terminal user management system 3 connected to the IA terminal 1 receives the correspondence of MID and AID, carries out a vicarious registration of ISP in place of AID, allocates SID to the new user information of the registration result, and associate the SID with MID in step S228 (refer to Fig. 24).

The IA terminal 1 receives the registration result from the IA terminal user management system 3 in step S229 in Fig. 23.

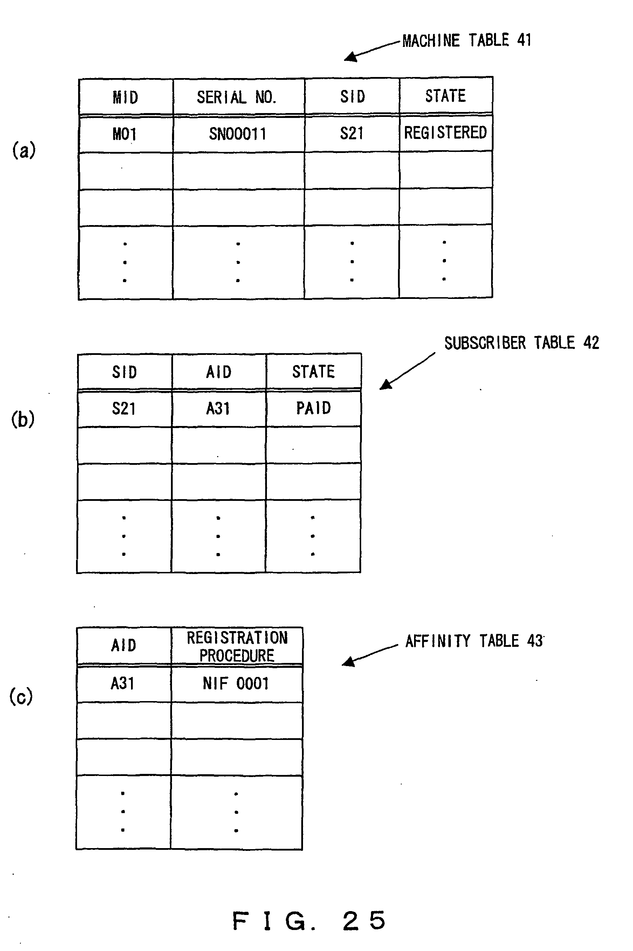

Shift the contents of the IA terminal user database 4 with which the IA terminal user management system 3 is provided to an "registered" state in step S230 (refer to Fig. 25).

After that, use ordinary service provided from ISP and ASP via the network 2 (step S231).

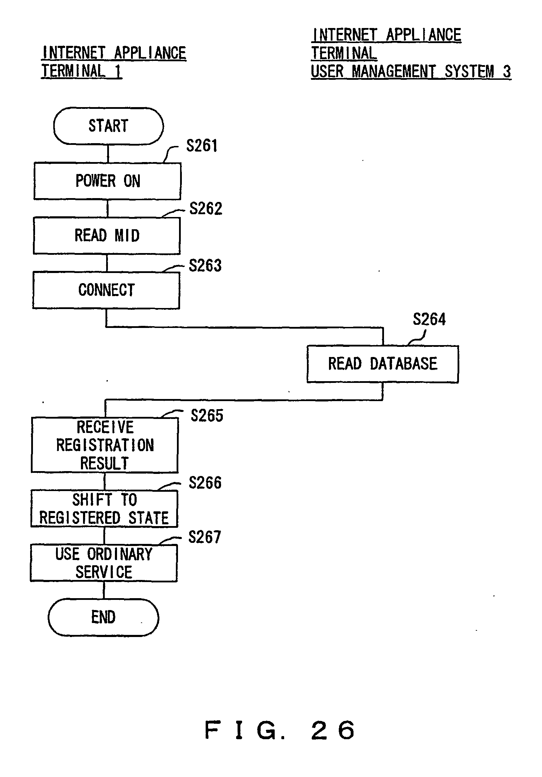

Described next is the breakdown replacement (breakdown replacement 1: SID input not required) which is the eighth embodiment to which the present invention applies with reference to Fig. 26 through Fig. 29.

Fig. 26 is a flowchart showing the flow of the registration processing of replacement due to breakdown (replacement 1: SID input not required).

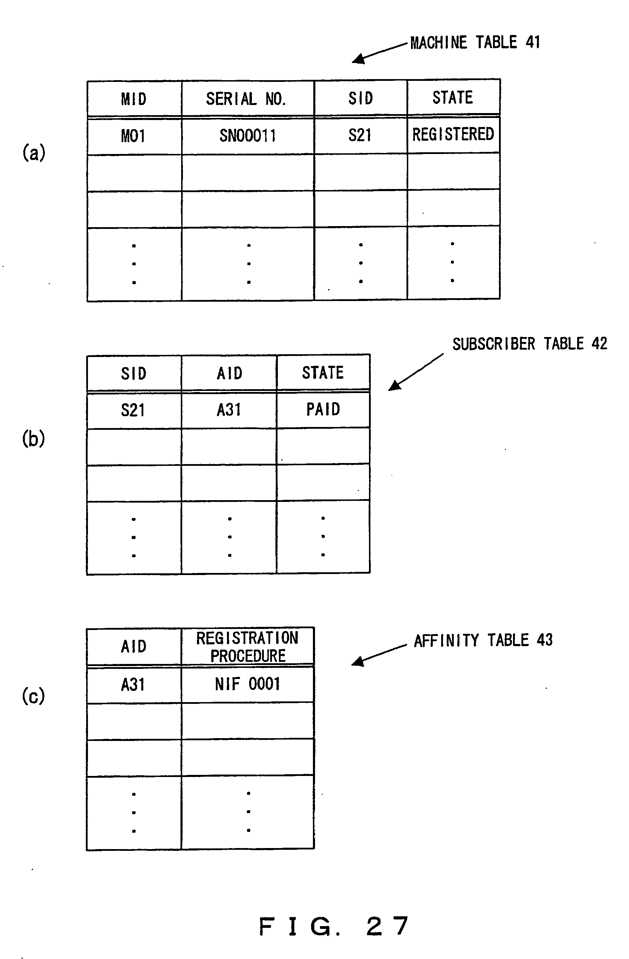

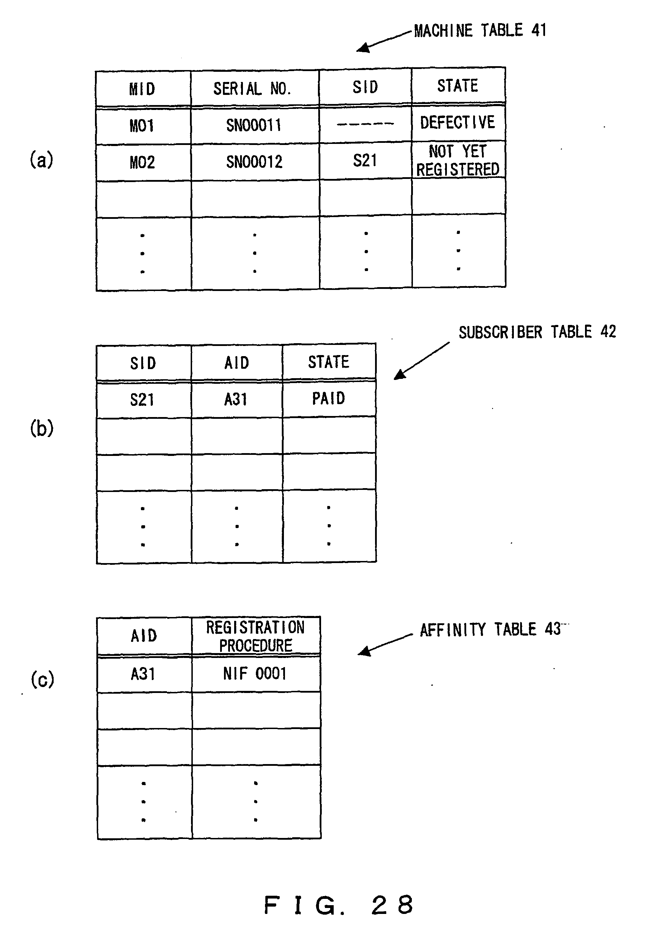

Prior to breakdown replacement (breakdown replacement 1: SID input not required), the IA terminal 1 is informed of old MID and new MID, changes the correspondence of old MID and SID (refer to Fig. 27) to the correspondence of new MID and SID (refer to Fig. 28), and changes the contents of the IA terminal user database to a "not yet registered" state.

First, turn on the power supply of the IA terminal 1 (ON) in step S261.

Since the registered flag stored in the internal memory of the IA terminal 1 has not been registered yet (e.g. 0 is stored), read the machine identifier (MID) given to uniquely identify the IA terminal 1 as hardware in step S262.

Connect the IA terminal 1 to the IA terminal user management system 3 in step S263.

Then, the IA terminal user management system 3 connected to the IA terminal 1 reads the IA terminal user database 4 (refer to Fig. 28) in step S264.

The IA terminal 1 receives the registration result from the IA terminal user management system 3 in step S265.

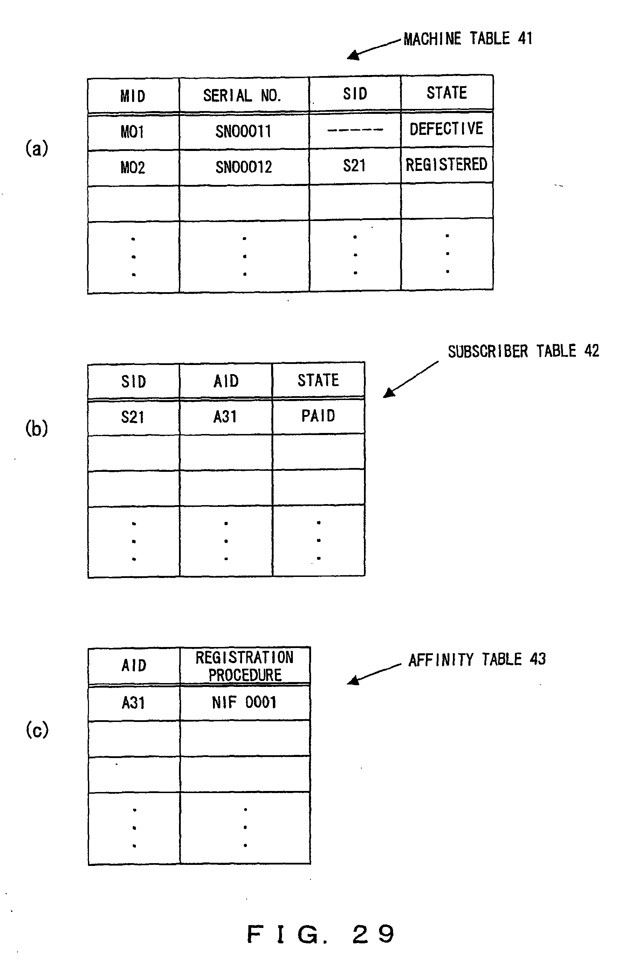

Shift the contents of the IA terminal user database 4 with which the IA terminal user management system 3 is provided to an "registered" state in step S266 (refer to Fig. 29).

After that, use ordinary service provided from ISP and ASP via the network 2 (step S267).

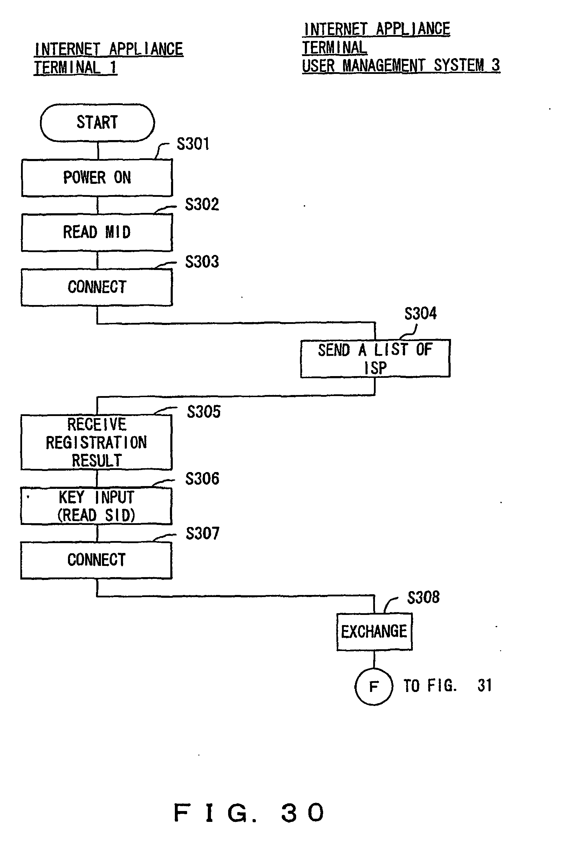

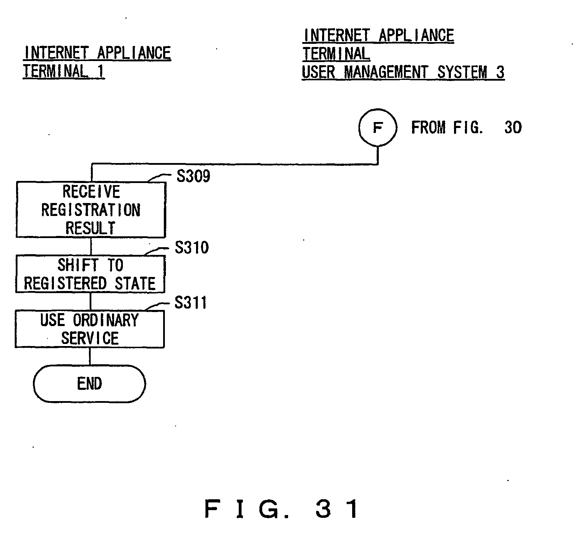

Described next is the breakdown replacement (breakdown replacement 2: SID input required) which is the ninth embodiment to which the present invention applies with reference to Fig. 30 and Fig. 31.

Fig. 30 and Fig. 31 are flowcharts showing the flow of the registration processing of replacement due to breakdown (replacement 2: SID input required).

First, turn on the power supply of the IA terminal 1 (ON) in step S301.

Since the registered flag stored in the internal memory of the IA terminal 1 has not been registered yet (e.g. 0 is stored), read the machine identifier (MID) given to uniquely identify the IA terminal 1 as hardware in step S302.

Connect the IA terminal 1 to the IA terminal user management system 3 in step S303.

Then, the IA terminal user management system 3 connected to the IA terminal 1 transmits a list of ISP to the IA terminal 1 in step S304.

The IA terminal user management system 3 connected to the IA terminal 1 receives the registration result (a list of ISP) from the IA terminal user management system 3 in step S305.

Since registration has not been completed yet, input insufficient data (AID) required for user registration from an input device such as a keyboard in step S306.

Connect the IA terminal 1 to the IA terminal user management system 3 again in step S307.

The IA terminal user management system 3 connected to the IA terminal 1 exchanges data concerning the IA terminal 1 in step S308.

In Fig. 31, the IA terminal 1 receives the registration result from the IA terminal user management system 3 in step S309.

Shift the contents of the IA terminal user database 4 with which the IA terminal user management system 3 is provided to a "registered" state in step S310.

After that, use ordinary service provided from ISP and ASP via the network 2 (step S311).

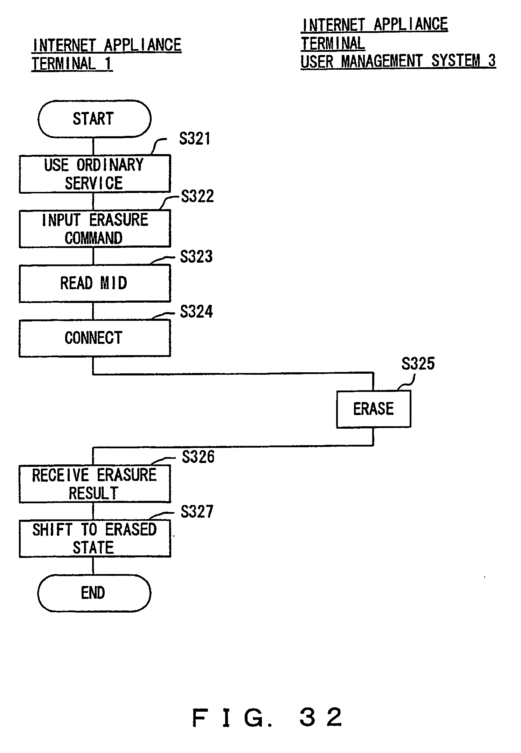

Described next is the registration erasure which is the tenth embodiment to which the present invention applies with reference to Fig. 32 through Fig. 34.

Fig. 32 is a flowchart (flowchart 2) showing the flow of the registration processing of registration erasure.

In registration erasure, all the information has already been registered, and MID has already been associated with SID.

Use ordinary service provided from ISP and ASP via the network 2 in step S321.

Input the command for erasing user registration in step S322, and read MID in step S323.

Connect the IA terminal 1 to the IA terminal user management system 3 in step S324, and transmit the erasure command inputted in step S322 and the MID read in step S323 to the IA terminal user management system 3.

Then, the IA terminal user management system 3 connected to the IA terminal 1 erases data concerning the IA terminal 1 in step S325 (receives MID, identifies SID, and erases MID and SID).

Since the erasure result is transmitted from the IA terminal user management system 3, the IA terminal 1 receives the transmitted erasure result is step 326, and shifts the contents of the IA terminal user database 4 with which the IA terminal user management system 3 is provided to an "erased" state in step S327.

The embodiments of the present invention have so far been described referring to various drawings. The IA terminal 1 to which the present invention is applied, or the IA terminal user management system 3 to which the present invention is applied is, if its function can be executed, not limited to the embodiments described above, but can be a stand-alone apparatus, a system consisting of a plurality of apparatuses, an integrated system, or a system which executes processing via a network such as a LAN or WAN.

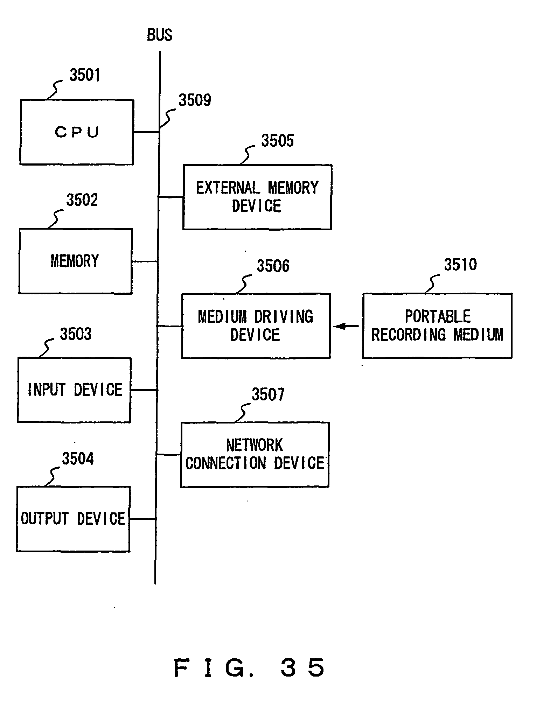

Also, the present invention can be realized by a system which comprises a CPU 3501 connected to a bus 3509, ROM and RAM 3502, an input device 3503, an output device 3504, an external recording device 3505, a medium driving device 3506, a portable recording medium 3510, and a network connection device 3507 as shown in Fig. 35. That is, it is needless to say that the function of the above-mentioned embodiments can be realized in such a manner that the ROM and RAM 3502, external recording device 3505, and portable recording medium 3510 which record the program for realizing the systems of the embodiments described above are supplied to the IA terminal 1 or the IA terminal user management system 3, and the computer of the IA terminal 1 or the IA terminal user management system 3 reads and executes the program.

In this case, the program which is read from the portable recording medium 146, etc. realizes a new function of the present invention in itself, and the portable recording medium 3510, etc. which record the program also embodies the present invention.

As a portable recording medium 3510 for carrying the program, various recording media capable of holding digital data can be used; for example, a floppy disc, a hard disc, an optical disc, a magneto-optical disc, CD-ROM, CD-R, DVD-ROM, DVD-RAM, a magnetic tape, a nonvolatile memory card, a ROM card, or a network connection device 3507 such as electronic mail and personal computer communication (in other words, telecommunication lines).

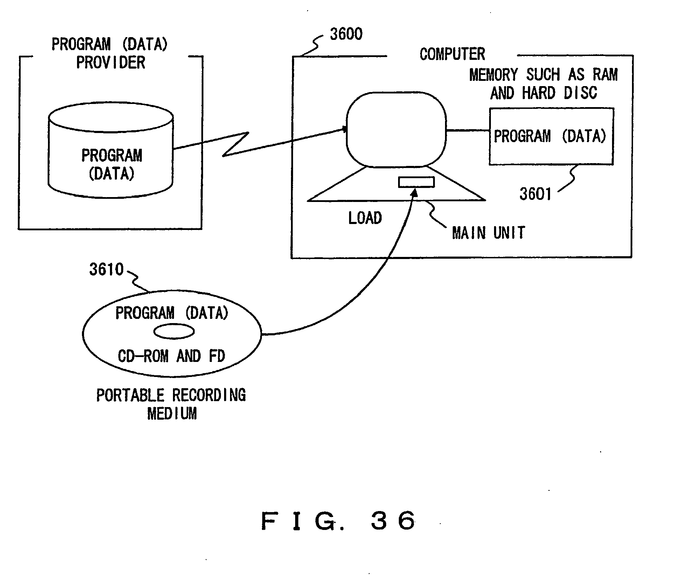

Not only the function of the above-mentioned embodiments is realized by executing the program read by computer 3600 from the memory 3601 as shown in Fig. 36, but also the operating system which operates on the computer 3600 executes part or the whole of the processing based on the instructions of the program, and the function of the above-mentioned embodiments is realized by said processing.

Also, the program code which has been read from the portable recording medium 3610 and the program (data) provided by a program (data) provider may be stored in a memory 3601 provided in an expansion board inserted in the computer 3600 or in the memory 3601 provided in a function extension unit (e.g. docking station) connected to the computer 3600, in which case the expansion board or function extension unit execute part or the whole of the actual processing based on the instructions of the program code, thus causing the function of the above-mentioned embodiments to be realized.

In addition, although the above description refers to Internet appliances for ease of understanding, it will be understood that the present invention can be applied to any information network in which terminals are connected to a service provider, whether or not employing Internet standards and protocols.

That is to say, the present invention is not limited to the above-mentioned embodiments, but can be realized in various forms or constructions within the scope of the present invention.

As has been explained, according to the present invention, a user who is not acquainted with an IA terminal or uses an IA terminal for the first time can easily register information needed for Internet access in an Internet appliance user management system without changing the IA terminal and the software for controlling the IA terminal, regardless of the distribution method of the IA terminal.

## Claims

1. An Internet appliance -IA- user management system (3) capable of being connected to an IA terminal (1) of a user via a network (2) and capable of performing registration of at least said user, comprising:
an IA terminal user storing unit (4) for storing service information including the kind of service to be received, and user registration information including user information concerning the user who receives the service;
a transmission and receiving unit for receiving the user registration information from the IA terminal (1), and requesting the IA terminal (1) to input the user registration information;
a user registration information collation unit for collating the user registration information received by the transmission and receiving unit with the user registration information stored in the IA terminal user storing unit (4); and
an automatic registration unit for obtaining the user registration information which has not been collated by the user registration information collation unit from the IA terminal (1) by means of the transmission and receiving unit and registering said information in the IA terminal user storing unit (4);
**characterised in that**:
said IA terminal user storing unit (4) is arranged to store IA terminal information including an IA terminal identifier for identifying the IA terminal (1);
said transmission and receiving unit is arranged to receive the IA terminal identifier from the IA terminal; and
said user information collation unit is arranged for collating the IA terminal identifier received from the IA terminal with the IA terminal identifier stored in the IA terminal user storing unit (4);
whereby said registration includes registration of said IA terminal in addition to registration of said user.

2. The IA terminal user management system (3) according to claim 1, wherein
the transmission and receiving unit receives user registration information including the IA terminal identifier from the IA terminal (1);
the user registration information collation unit collates the received user registration information with the user registration information stored in the IA terminal user storing unit (4);
the transmission and receiving unit transmits the collated result to the IA terminal (1);
the transmission and receiving unit receives additional user registration information which is not included in the received user registration information from the IA terminal (1); and
the automatic registration unit registers the received additional user registration information in the IA terminal user storing unit (4).

3. The IA terminal user management system (3) according to claim 1 or 2, wherein the IA terminal user storing unit (4) comprises:
a machine table (41) which stores the IA terminal identifier in association with a user identifier for identifying the user;
a subscriber table (42) which stores the user identifier in association with a service provider identifier for identifying the service provider who provides the service; and
an affinity table (43) which stores the service provider identifier in association with the registration procedure for registering the user determined by the service provider.

4. The IA terminal user management system (3) according to claim 1, 2, or 3, wherein the automatic registration unit erases the user registration information stored in the IA terminal user storing unit (4).

5. An Internet Appliance -IA- (1) terminal (1) for performing information communication via a network (2), comprising:
a transmission and receiving unit for transmitting service information including the kind of service to be received, and user registration information including user information concerning the user who receives the service, to an IA terminal user management system (3) which manages the IA terminal (1) via the network (2); and
an input unit for inputting missing user registration information at the request of the IA terminal user management system (3);
wherein the transmission and receiving unit transmits the user registration information inputted by the input unit to the IA terminal user management system (3);
**characterised in that**:
said transmission and receiving unit is operable to transmit IA terminal information including an IA terminal identifier for identifying the IA terminal (1) to the IA terminal user management system (3).

6. The IA terminal (1) according to claim 5, wherein
the transmission and receiving unit transmits user registration information including the IA terminal (1) identifier to the IA terminal user management system (3);
the transmission and receiving unit receives the result of collation of the transmitted user registration information and user registration information stored in the IA terminal user management system (3);
the input unit inputs additional user registration information which is not included in the received user registration information; and
the transmission and receiving unit transmits the inputted additional user registration information to the IA terminal user management system (3).

7. A program which, when run on a computer, causes the computer to perform an Internet Appliance -IA- terminal user management method for management of IA terminals (1) connected to the computer via a network (2), the method having the steps of:
storing in a database (4), service information including the kind of service to be received, and user registration information including user information concerning the user who receives the service;
transmitting and receiving information, including receiving the user registration information from the IA terminal (1), and requesting the IA terminal (1) to input the user registration information;
collating the received user registration information with the user registration information stored in the database (4); and
obtaining the user registration information which is not collated by the collating step from the IA terminal (1), and automatically registering said information in the database (4);
**characterised in that**:
said storing step includes storing IA terminal information including an IA terminal identifier for identifying the IA terminal (1);
said receiving step comprises receiving the IA terminal identifier from the IA terminal;
said collating step includes collating the IA terminal identifier received in said receiving step with the IA terminal identifier stored in said storing step; and
said automatic registering step includes registration of the IA terminal in addition to registration of the user.

8. The program according to claim 7, wherein
said step of transmitting and receiving the user registration information and requesting the IA terminal (1) to input the user registration information, includes:
receiving user registration information including the IA terminal identifier from the IA terminal (1);
transmitting the result of said collating step to the IA terminal (1); and
receiving additional user registration information which is not included in the received user registration information from the IA terminal (1);
and wherein the automatic registering step registers the received additional user registration information in the database (4).

9. A program which, when run on a computer, causes the computer to perform information communication via a network (2) with an terminal user management system (3), by steps of:
transmitting and receiving information, including transmitting service information including the kind of service to be received, and user registration information including user information concerning the user who receives the service to the IA terminal user management system (3) which manages the IA terminal (1) via the network (2); and
inputting missing user registration information at the request of the IA terminal user management system (3) ;
wherein the transmission and receiving step transmits the inputted user registration information to the IA terminal user management system (3)
**characterised in that** said transmitting and receiving step includes transmitting IA terminal information including an IA terminal identifier for identifying the IA terminal (1).

10. The program according to claim 9, wherein
the transmission and receiving step transmits user registration information including the IA terminal identifier to the IA terminal user management system (3) ;
the transmission and receiving step receives the result of collation of the transmitted user registration information with user registration information stored in the IA terminal user management system (3), from the IA terminal user management system (3);
the input step inputs additional user registration information which is not included in the received user registration information; and
the transmission and receiving step transmits the inputted additional user registration information to the IA terminal user management system (3).

## Patentansprüche

1. Internet-Gerät-(engl.: Internet appliance = IA)-Nutzerverwaltungssystem (3), das mit einem IA-Terminal (1) eines Nutzers über ein Netz (2) verbunden werden kann und die Registrierung wenigstens des Nutzers ausführen kann, umfassend:
eine IA-Terminal-Nutzerspeichereinheit (4) zum Speichern von Dienstinformationen, die die Art des zu empfangenden Dienstes enthalten, und von Nutzerregistrierinformationen, die Nutzerinformationen bezüglich des Nutzers enthalten, der den Dienst empfängt;
eine Sende- und Empfangseinheit zum Empfangen der Nutzerregistrierinformationen von dem IA-Terminal (1) und Auffordern des IA-Terminals (1) zur Eingabe der Nutzerregistrierinformationen;
eine Nutzerregistrierinformationsvergleichseinheit zum Vergleichen der Nutzerregistrierinformationen, die durch die Sende- und Empfangseinheit empfangen werden, mit den Nutzerregistrierinformationen, die in der IA-Terminal-Nutzerspeichereinheit (4) gespeichert sind; und
eine automatische Registriereinheit zum Erhalten der Nutzerregistrierinformationen, die durch die Nutzerregistrierinformationsvergleichseinheit nicht verglichen worden sind, von dem IA-Terminal (1) über die Sende- und Empfangseinheit und zum Registrieren der Informationen in der IA-Terminal-Nutzerspeichereinheit (4);
**dadurch gekennzeichnet, dass**:
die IA-Terminal-Nutzerspeichereinheit (4) angeordnet ist, um IA-Terminal-Informationen zu speichern, die einen IA-Terminal-Identifikator zum Identifizieren des IA-Terminals (1) enthalten;
die Sende- und Empfangseinheit angeordnet ist, um den IA-Terminal-Identifikator von dem IA-Terminal zu empfangen; und
die Nutzerinformationsvergleichseinheit angeordnet ist zum Vergleichen des IA-Terminal-Identifikators, der von dem IA-Terminal empfangen wird, mit dem IA-Terminal-Identifikator, der in der IA-Terminal-Nutzerspeichereinheit (4) gespeichert ist;
wodurch die Registrierung die Registrierung des IA-Terminals zusätzlich zu der Registrierung des Nutzers enthält.

2. IA-Terminal-Nutzerverwaltungssystem (3) nach Anspruch 1, bei dem
die Sende- und Empfangseinheit Nutzerregistrierinformationen, die den IA-Terminal-Identifikator enthalten, von dem IA-Terminal (1) empfängt;
die Nutzerregistrierinformationsvergleichseinheit die empfangenen Nutzerregistrierinformationen mit den Nutzerregistrierinformationen vergleicht, die in der IA-Terminal-Nutzerspeichereinheit (4) gespeichert sind;
die Sende- und Empfangseinheit das Vergleichsresultat zu dem IA-Terminal (1) sendet;
die Sende- und Empfangseinheit zusätzliche Nutzerregistrierinformationen, die nicht in den empfangenen Nutzerregistrierinformationen enthalten sind, von dem IA-Terminal (1) empfängt; und
die automatische Registriereinheit die empfangenen zusätzlichen Nutzerregistrierinformationen in der IA-Terminal-Nutzerspeichereinheit (4) speichert.

3. IA-Terminal-Nutzerverwaltungssystem (3) nach Anspruch 1 oder 2, bei dem die IA-Terminal-Nutzerspeichereinheit (4) umfasst:
eine Maschinentabelle (41), die den IA-Terminal-Identifikator in Zuordnung zu einem Nutzeridentifikator zum Identifizieren des Nutzers speichert;
eine Teilnehmertabelle (42), die den Nutzeridentifikator in Zuordnung zu einem Dienstanbieteridentifikator zum Identifizieren des Dienstanbieters speichert, der den Dienst anbietet; und
eine Affinitätstabelle (43), die den Dienstanbieteridentifikator in Zuordnung zu der Registrierprozedur zum Registrieren des durch den Dienstanbieter bestimmten Nutzers speichert.

4. IA-Terminal-Nutzerverwaltungssystem (3) nach Anspruch 1, 2 oder 3, bei dem die automatische Registriereinheit die Nutzerregistrierinformationen löscht, die in der IA-Terminal-Nutzerspeichereinheit (4) gespeichert sind.

5. Internet-Gerät-(IA)-Terminal (1) zum Ausführen einer Informationskommunikation über ein Netz (2), umfassend:
eine Sende- und Empfangseinheit zum Senden von Dienstinformationen, die die Art des zu empfangenden Dienstes enthalten, und von Nutzerregistrierinformationen, die Nutzerinformationen bezüglich des Nutzers enthalten, der den Dienst empfängt, zu einem IA-Terminal-Nutzerverwaltungssystem (3), das das IA-Terminal (1) verwaltet, über das Netz (2); und
eine Eingabeeinheit zum Eingeben von fehlenden Nutzerregistrierinformationen auf Aufforderung durch das IA-Terminal-Nutzerverwaltungssystem (3);
bei dem die Sende- und Empfangseinheit die Nutzerregistrierinformationen, die durch die Eingabeeinheit eingegeben werden, zu dem IA-Terminal-Nutzerverwaltungssystem (3) sendet;
**dadurch gekennzeichnet, dass**:
die Sende- und Empfangseinheit betriebsfähig ist, um IA-Terminal-Informationen, die einen IA-Terminal-Identifikator zum Identifizieren des IA-Terminals (1) enthalten, zu dem IA-Terminal-Nutzerverwaltungssystem (3) zu senden.

6. IA-Terminal (1) nach Anspruch 5, bei dem
die Sende- und Empfangseinheit Nutzerregistrierinformationen, die den IA-Terminal-Identifikator enthalten, zu dem IA-Terminal-Nutzerverwaltungssystem (3) sendet;
die Sende- und Empfangseinheit das Resultat des Vergleichs der gesendeten Nutzerregistrierinformationen und der Nutzerregistrierinformationen, die in dem IA-Terminal-Nutzerverwaltungssystem (3) gespeichert sind, empfängt;
die Eingabeeinheit zusätzliche Nutzerregistrierinformationen eingibt, die nicht in den empfangenen Nutzerregistrierinformationen enthalten sind; und
die Sende- und Empfangseinheit die eingegebenen zusätzlichen Nutzerregistrierinformationen zu dem IA-Terminal-Nutzerverwaltungssystem (3) sendet.

7. Programm, das bewirkt, wenn es auf einem Computer läuft, dass der Computer ein Internet-Gerät-(IA)-Terminal-Nutzerverwaltungsverfahren zum Verwalten von IA-Terminals (1) ausführt, die mit dem Computer über ein Netz (2) verbunden sind, welches Verfahren die Schritte umfasst:
Speichern, in einer Datenbank (4), von Dienstinformationen, die die Art des zu empfangenden Dienstes enthalten, und von Nutzerregistrierinformationen, die Nutzerinformationen bezüglich des Nutzers enthalten, der den Dienst empfängt;
Senden und Empfangen von Informationen, einschließlich des Empfangens der Nutzerregistrierinformationen von dem IA-Terminal (1), und Auffordern des IA-Terminals (1) zur Eingabe der Nutzerregistrierinformationen;
Vergleichen der empfangenen Nutzerregistrierinformationen mit den Nutzerregistrierinformationen, die in der Datenbank (4) gespeichert sind; und
Erhalten der Nutzerregistrierinformationen, die durch den Vergleichsschritt nicht verglichen wurden, von dem IA-Terminal (1) und automatisches Registrieren der Informationen in der Datenbank (4);
**dadurch gekennzeichnet, dass**:
der Speicherschritt das Speichern von IA-Terminal-Informationen umfasst, die einen IA-Terminal-Identifikator zum Identifizieren des IA-Terminals (1) enthalten;
der Empfangsschritt das Empfangen des IA-Terminal-Identifikators von dem IA-Terminal umfasst;
der Vergleichsschritt das Vergleichen des IA-Terminal-Identifikators, der bei dem Empfangsschritt empfangen wird, mit dem IA-Terminal-Identifikator umfasst, der bei dem Speicherschritt gespeichert wird; und
der automatische Registrierschritt das Registrieren des IA-Terminals zusätzlich zu dem Registrieren des Nutzers umfasst.

8. Programm nach Anspruch 7, bei dem
der Schritt zum Senden und Empfangen der Nutzerregistrierinformationen und zum Auffordern des IA-Terminals (1) zur Eingabe der Nutzerregistrierinformationen enthält:
Empfangen von Nutzerregistrierinformationen, die den IA-Terminal-Identifikator enthalten, von dem IA-Terminal (1) ;
Senden des Resultates des Vergleichsschritts zu dem IA-Terminal (1); und
Empfangen von zusätzlichen Nutzerregistrierinformationen, die nicht in den empfangenen Nutzerregistrierinformationen enthalten sind, von dem IA-Terminal (1);
und bei dem der automatische Registrierschritt die empfangenen zusätzlichen Nutzerregistrierinformationen in der Datenbank (4) registriert.

9. Programm, das bewirkt, wenn es auf einem Computer läuft, dass der Computer eine Informationskommunikation über ein Netz (2) mit einem Internet-Gerät-(IA)-Terminal-Nutzerverwaltungssystem (3) durch die Schritte ausführt:
Senden und Empfangen von Informationen, einschließlich des Sendens von Dienstinformationen, die die Art des zu empfangenden Dienstes enthalten, und von Nutzerregistrierinformationen, die Nutzerinformationen bezüglich des Nutzers enthalten, der den Dienst empfängt, zu dem IA-Terminal-Nutzerverwaltungssystem (3), das das IA-Terminal (1) verwaltet, über das Netz (2); und
Eingeben von fehlenden Nutzerregistrierinformationen auf Aufforderung durch das IA-Terminal-Nutzerverwaltungssystem (3);
bei dem der Sende- und Empfangsschritt die eingegebenen Nutzerregistrierinformationen zu dem IA-Terminal-Nutzerverwaltungssystem (3) sendet;
**dadurch gekennzeichnet, dass** der Sende- und Empfangsschritt das Senden von IA-Terminal-Informationen umfasst, die einen IA-Terminal-Identifikator zum Identifizieren des IA-Terminals (1) enthalten.

10. Programm nach Anspruch 9, bei dem
der Sende- und Empfangsschritt Nutzerregistrierinformationen, die den IA-Terminal-Identifikator enthalten, zu dem IA-Terminal-Nutzerverwaltungssystem (3) sendet;
der Sende- und Empfangsschritt das Resultat des Vergleichs der gesendeten Nutzerregistrierinformationen mit Nutzerregistrierinformationen, die in dem IA-Terminal-Nutzerverwaltungssystem (3) gespeichert sind, von dem IA-Terminal-Nutzerverwaltungssystem (3) empfängt;
der Eingabeschritt zusätzliche Nutzerregistrierinformationen eingibt, die nicht in den empfangenen Nutzerregistrierinformationen enthalten sind; und
der Sende- und Empfangsschritt die eingegebenen zusätzlichen Nutzerregistrierinformationen zu dem IA-Terminal-Nutzerverwaltungssystem (3) sendet.

## Revendications

1. Système de gestion d'utilisateur d'équipement Internet -IA- (3) pouvant être relié à un terminal d'équipement IA (1) d'un utilisateur par l'intermédiaire d'un réseau (2) et pouvant exécuter l'enregistrement d'au moins ledit utilisateur, comprenant :
une unité de mémorisation d'utilisateur de terminal d'équipement IA (4) destinée à mémoriser les informations de service comprenant le type de service devant être reçu, et les informations d'enregistrement d'utilisateur comprenant les informations d'utilisateur concernant l'utilisateur qui reçoit le service,
une unité d'émission et de réception destinée à recevoir les informations d'enregistrement de l'utilisateur du terminal d'équipement IA (1) et à demander au terminal d'équipement IA (1) d'appliquer en entrée les informations d'enregistrement d'utilisateur,
une unité de collationnement des informations d'enregistrement d'utilisateur destinée à collationner les informations d'enregistrement d'utilisateur reçues par l'unité d'émission et de réception avec les informations d'enregistrement d'utilisateur mémorisées dans l'unité de mémorisation d'utilisateur le terminal d'équipement IA (4), et
une unité d'enregistrement automatique destinée à obtenir les informations d'enregistrement d'utilisateur qui n'ont pas été collationnées par l'unité de collationnement d'informations d'enregistrement d'utilisateur à partir du terminal d'équipement IA (1) au moyen de l'unité d'émission et de réception et à enregistrer lesdites informations dans l'unité de mémorisation d'utilisateur de terminal d'équipement IA (4),
**caractérisé en ce que**
ladite unité de mémorisation d'utilisateur de terminal d'équipement IA (4) est conçue pour mémoriser les informations de terminal d'équipement IA comprenant un identificateur de terminal IA destiné à identifier le terminal d'équipement IA- (1),
ladite unité d'émission et de réception est conçue pour recevoir l'identificateur de terminal d'équipement IA du terminal d'équipement IA, et
ladite unité de collationnement d'informations d'utilisateur est agencée pour collationner l'identificateur du terminal d'équipement IA reçu du terminal d'équipement IA avec l'identificateur de terminal d'équipement IA mémorisé dans l'unité de mémorisation d'utilisateur de terminal d'équipement IA (4),
grâce à quoi ledit enregistrement comprend l'enregistrement dudit terminal d'équipement IA en plus de l'enregistrement dudit utilisateur.

2. Système de gestion d'utilisateur de terminal d'équipement IA (3) selon la revendication 1, dans lequel
l'unité d'émission et de réception reçoit les informations d'enregistrement d'utilisateur comprenant l'identificateur de terminal d'équipement IA du terminal d'équipement IA (1),
l'unité de collationnement d'informations d'enregistrement d'utilisateur collationne les informations d'enregistrement d'utilisateur reçues avec les informations d'enregistrement d'utilisateur mémorisées dans l'unité de mémorisation de d'utilisateur de terminal d'équipement -IA (4),
l'unité d'émission et de réception transmet le résultat collationné au terminal d'équipement IA (1),
l'unité d'émission et de réception reçoit les informations d'enregistrement d'utilisateur supplémentaires qui ne sont pas incluses dans les informations d'enregistrement d'utilisateur reçues du terminal d'équipement IA (1), et
l'unité d'enregistrement automatique enregistre les informations d'enregistrement d'utilisateur supplémentaires reçues dans l'unité de mémorisation d'utilisateur de terminal d'équipement IA (4).

3. Système de gestion d'utilisateur de terminal d'équipement -IA (3) selon la revendication 1 ou 2, dans lequel l'unité de mémorisation d'utilisateur de terminal d'équipement IA (4) comprend :
une table de machines (41) qui mémorise l'identificateur de terminal d'équipement IA en association avec un identificateur d'utilisateur pour identifier l'utilisateur,
une table d'abonnés (42) qui mémorise l'identificateur de l'utilisateur en association avec un identificateur de fournisseur de services destiné à identifier le fournisseur de services qui fournit le service, et
une table d'affinités (43) qui mémorise l'identificateur du fournisseur de services en association avec la procédure d'enregistrement destinée à enregistrer l'utilisateur déterminé par le fournisseur de services.

4. Système de gestion d'utilisateur de terminal d'équipement IA (3) selon la revendication 1, 2, ou 3, dans lequel l'unité d'enregistrement automatique efface les informations d'enregistrement d'utilisateur mémorisées dans l'unité de mémorisation d'utilisateur de terminal d'équipement IA (4).

5. Terminal d'équipement Internet -IA- (1) destiné à exécuter une communication d'informations par l'intermédiaire d'un réseau (2), comprenant :
une unité d'émission et de réception destinée à transmettre des informations de service comprenant le type de service devant être reçu et des informations d'enregistrement d'utilisateur comprenant des informations d'utilisateur concernant l'utilisateur qui reçoit le service, à un système de gestion d'utilisateur de terminal d'équipement IA (3) qui gère le terminal d'équipement IA (1) par l'intermédiaire du réseau (2), et
une unité d'entrée destinée à appliquer en entrée des informations d'enregistrement d'utilisateur manquantes à la demande du système de gestion d'utilisateur de terminal d'équipement IA (3),
où l'unité d'émission et de réception transmet les informations d'enregistrement d'utilisateur appliquées en entrée par l'unité d'entrée dans le système de gestion d'utilisateur de terminal d'équipement IA (3),
**caractérisé en ce que** :
ladite unité d'émission et de réception peut être mise en oeuvre pour transmettre des informations de terminal d'équipement IA comprenant un identificateur de terminal d'équipement IA pour identifier le terminal d'équipement IA (1) au système de gestion d'utilisateur de terminal d'équipement IA (3).

6. Terminal d'équipement IA (1) selon la revendication 5, dans lequel
l'unité d'émission et de réception transmet des informations d'enregistrement d'utilisateur comprenant l'identificateur du terminal d'équipement IA (1) au système de gestion d'utilisateur de terminal d'équipement IA(3),
l'unité d'émission et de réception reçoit le résultat du collationnement des informations d'enregistrement d'utilisateur transmises et des informations d'enregistrement d'utilisateur mémorisées dans le système de gestion d'utilisateur le terminal d'équipement IA (3),
l'unité d'entrée applique en entrée des informations d'enregistrement d'utilisateur supplémentaires qui ne sont pas incluses dans les informations d'enregistrement d'utilisateur reçues, et
l'unité d'émission et de réception transmet les informations d'enregistrement d'utilisateur supplémentaires reçues en entrée au système de gestion d'utilisateur de terminal d'équipement IA (3).

7. Programme qui, lorsqu'il est exécuté sur un ordinateur, amène l'ordinateur à exécuter un procédé de gestion d'utilisateur de terminal d'équipement Internet -IA- -pour la gestion de terminaux d'équipement IA (1) connectés à l'ordinateur par l'intermédiaire d'un réseau (2) le procédé comprenant les étapes consistant à :
mémoriser dans une base de données (4) les informations de service comprenant le type de service devant être reçu, et les informations d'enregistrement d'utilisateur comprenant des informations d'utilisateur concernant l'utilisateur qui reçoit le service,
émettre et recevoir des informations, y compris la réception des informations d'enregistrement d'utilisateur provenant du terminal d'équipement IA (I), et demander au terminal d'équipement IA (1) d'appliquer en entrée les informations d'enregistrement d'utilisateur,
collationner les informations d'enregistrement d'utilisateur reçues avec les informations d'enregistrement d'utilisateur mémorisées dans la base de données (4), et
obtenir les informations d'enregistrement d'utilisateur qui ne sont pas collationnées par l'étape de collationnement à partir du terminal d'équipement IA (1) et à enregistrer automatiquement lesdites informations dans la base de données (4),
**caractérisé en ce que** :
ladite étape de mémorisation comprend la mémorisation d'informations de terminal d'équipement IA comprenant un identificateur de terminal d'équipement IA destiné à identifier le terminal d'équipement IA (1),
ladite étape de réception comprend la réception de l'identificateur de terminal d'équipement IA depuis le terminal d'équipement IA,
ladite étape de collationnement comprend le collationnement de l'identificateur de terminal d'équipement IA reçu dans ladite étape de réception avec l'identificateur de terminal d'équipement LA mémorisé dans ladite étape de mémorisation, et
ladite étape d'enregistrement automatique comprend l'enregistrement du terminal d'équipement IA en plus de l'enregistrement de l'utilisateur.

8. Programme selon la revendication 7, dans lequel ladite étape d'émission et de réception des informations d'enregistrement d'utilisateur et de demande au terminal d'équipement IA (1) d'appliquer en entrée les informations d'enregistrement d'utilisateur, comprend les étapes consistant à :
recevoir des informations d'enregistrement d'utilisateur comprenant l'identificateur de terminal d'équipement IA du terminal d'équipement IA(1),
transmettre les résultats de ladite étape de collationnement au terminal d'équipement IA (1), et
recevoir les informations d'enregistrement d'utilisateur supplémentaires qui ne sont pas incluses dans les informations d'enregistrement d'utilisateur reçues du terminal d'équipement IA (1),
et où l'étape d'enregistrement automatique enregistre les informations d'enregistrement d'utilisateur supplémentaires reçues dans la base de données (4).

9. Programme qui, lorsqu'il est exécuté sur un ordinateur, amène l'ordinateur à exécuter une communication d'informations par le biais d'un réseau (2) avec un système de gestion d'utilisateur de terminal d'équipement Internet - IA- (3) par le biais des étapes consistant à :
émettre et recevoir des informations, comprenant la transmission d'informations de service comprenant le type de service à recevoir, et des informations d'enregistrement d'utilisateur comprenant des informations d'utilisateur concernant l'utilisateur qui reçoit le service au système de gestion d'utilisateur de terminal d'équipement IA (3) qui gère le terminal d'équipement IA (1) par le biais du réseau (2), et
appliquer en entrée des informations d'enregistrement d'utilisateur manquantes à la demande du système de gestion d'utilisateur de terminal d'équipement IA (3), et
où l'étape d'émission et de réception transmet les informations d'enregistrement d'utilisateur reçues en entrée au système de gestion d'utilisateur de terminal d'équipement IA (3),
**caractérisé en ce que** ladite étape d'émission et de réception comprend la transmission d'informations de terminal d'équipement IA comprenant un identificateur de terminal d'équipement IA destiné à identifier le terminal d'équipement IA(1).

10. Programme selon la revendication 9, dans lequel
l'étape d'émission et de réception transmet des informations d'enregistrement d'utilisateur comprenant l'identificateur de terminal d'équipement IA au système de gestion d'utilisateur de terminal d'équipement IA (3),
l'étape d'émission et de réception reçoit le résultat du collationnement des informations d'enregistrement d'utilisateur transmises avec les informations d'enregistrement d'utilisateur mémorisées dans le système de gestion d'utilisateur de terminal d'équipement IA (3) du système de gestion d'utilisateur de terminal d'équipement IA (3),
l'étape d'entrée applique en entrée des informations d'enregistrement d'utilisateur supplémentaires qui ne sont pas incluses dans les informations d'enregistrement d'utilisateur reçues, et
l'étape d'émission et de réception transmet les informations d'enregistrement d'utilisateur supplémentaires reçues en entrée au système de gestion d'utilisateur de terminal d'équipement (3).
